(19) 

**Europäisches Patentamt**

**European Patent Office**

**Office européen des brevets**

(11) **EP 4 383 763 A1**

(12) **EUROPEAN PATENT APPLICATION**
published in accordance with Art. 153(4) EPC

(43) Date of publication:
**12.06.2024 Bulletin 2024/24**

(21) Application number: **22863285.7**

(22) Date of filing: **25.08.2022**

(51) International Patent Classification (IPC):
**H04W 4/40** *(2018.01)*

(52) Cooperative Patent Classification (CPC):
**H04W 4/40; H04W 72/04**

(86) International application number:
**PCT/CN2022/114679**

(87) International publication number:
**WO 2023/030147 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 CN 202111013768**

(71) Applicant: **Huawei Technologies Co., Ltd.
Shenzhen, Guangdong 518129 (CN)**

(72) Inventors:
- **SU, Hongjia
  Shenzhen, Guangdong 518129 (CN)**
- **LU, Lei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RESOURCE CONFIGURATION METHOD AND COMMUNICATION APPARATUS**

(57) This application discloses a resource configuration method and a communication apparatus, and is applicable to fields such as V2X, internet of vehicles, intelligent driving, or intelligent connected vehicles. The method includes: A first terminal apparatus obtains first configuration information, and sends resource occupation information to a network apparatus. The first configuration information may indicate a first resource pool, and the first resource pool is used by the first terminal apparatus to send first information. The resource occupation information may indicate resource occupation of a second information set in the first resource pool. The first terminal apparatus may determine, when at least one second terminal apparatus sends second information, resource occupation in the first resource pool, and notify the network apparatus of the resource occupation. The network apparatus may determine, based on the resource occupation information, actual occupation, of resources that are in the first resource pool, by the second information. In this way, the network device flexibly adjusts, based on the actual occupation, of allocated resources, by the second information, resources configured for a terminal device that transmits the first information and a terminal device that transmits the second information, to improve resource utilization.

FIG. 4

## Description

## CROSS-REFERENCE TO RELATED APPLICATION

This application claims priority to Chinese Patent Application No. 202111013768.9, filed with the China National Intellectual Property Administration on August 31, 2021 and entitled "RESOURCE CONFIGURATION METHOD AND COMMUNICATION APPARATUS", which is incorporated herein by reference in its entirety.

## TECHNICAL FIELD

This application relates to the field of sidelink technologies, and in particular, to a resource configuration method and a communication apparatus on a sidelink.

## BACKGROUND

The 3rd generation partnership project (3rd generation partnership project, 3GPP) successively standardizes vehicle to everything (vehicle to everything, V2X) based on a long term evolution (long term evolution, LTE) technology (which may be referred to as LTE-V2X for short in this specification) and V2X based on a new radio (new radio, NR) technology (which may be referred to as NR-V2X for short in this specification). A terminal device in 3GPP release 16 supports coexistence of an LTE-V2X communication module and an NR-V2X communication module. In other words, in 3GPP release 16, an LTE-V2X communication module is disposed on a terminal device, an NR-V2X communication module is disposed on a terminal device, and an LTE-V2X communication module and an NR-V2X communication module are disposed on a terminal device.

A network device may allocate a resource used for sidelink communication. For example, the network device allocates a resource pool (which is also referred to as an LTE-V2X resource pool) that is based on LTE-V2X communication and a resource pool (which is also referred to as an NR-V2X resource pool) that is based on NR-V2X communication. A terminal device based on LTE-V2X communication may select a resource from the LTE-V2X resource pool for communication, and a terminal device based on NR-V2X communication selects a resource from the NR-V2X resource pool for communication. A terminal device may further measure a received signal strength indicator (received signal strength indicator, RSSI) of a resource in a resource pool, and report, to the network device, a measurement result that represents resource occupation. The network device may adjust, based on the measurement result, a parameter, for example, a quantity of occupied channels or a quantity of retransmissions, used by the terminal device to send information.

To improve resource utilization, a common resource may be configured for the terminal device that is based on the LTE-V2X communication and the terminal device that is based on the NR-V2X communication. For example, both a terminal device that uses an LTE-V2X communication module and a terminal device that uses an NR-V2X communication module may communicate on the common resource. However, when the terminal device that is based on the LTE-V2X communication and the terminal device that is based on the NR-V2X communication share the common resource, an RSSI, of the resource, that can represent resource occupation is measured, while the RSSI cannot represent whether the resource is occupied by the terminal device that is based on the LTE-V2X communication or is occupied by the terminal device that is based on the NR-V2X communication. In other words, the network device does not know actual occupation, of the common resource, by the terminal device that is based on the LTE-V2X communication and the terminal device that is based on the NR-V2X communication.

## SUMMARY

This application provides a resource configuration method and a communication apparatus, to determine actual usage, of a configured resource, by a terminal device that is based on LTE-V2X communication and a terminal device that is based on NR-V2X communication. In this way, appropriate resources are configured for the terminal device that is based on the LTE-V2X communication and the terminal device that is based on the NR-V2X communication, to improve resource utilization.

According to a first aspect, a resource configuration method is provided. The method may be performed by a first communication apparatus. The first communication apparatus may be a communication device, or may be a communication apparatus, for example, a chip system that can support the communication device in implementing a function required by the method. The following describes an example in which the communication device is a first terminal apparatus. The method includes the following steps.

The first terminal apparatus obtains first configuration information, and sends resource occupation information to a network apparatus. The first configuration information indicates a first resource pool. The first resource pool is used by the first terminal apparatus to send first information, and the first information is information using NR radio access. The resource occupation information indicates resource occupation information of a second information set in the first resource pool. The second information set includes information that is from at least one second terminal apparatus and that is received by the first terminal apparatus on a first time-frequency resource included in the first resource pool. Second information is information using evolved universal terrestrial radio access (evolved universal terrestrial radio access, E-UTRA) radio access. The information using the NR radio access is sidelink information implemented based on an NR technology, namely, information transmitted by using an NR-V2X communication module. Correspondingly, the information using the E-UTRA radio access may also be considered as sidelink information implemented based on an LTE technology, namely, information transmitted by using an LTE-V2X communication module. In a case in which the first terminal apparatus sends the first information, it may be considered that the first terminal apparatus is a terminal apparatus that is based on NR-V2X communication. In a case in which the second terminal apparatus sends the second information, it may be considered that the second terminal apparatus is a terminal apparatus that is based on LTE-V2X communication. The first resource pool may be considered as resources allocated to the first terminal apparatus. In a scenario in which the terminal apparatus based on the LTE-V2X communication and the terminal apparatus based on the NR-V2X communication share a resource, the at least one second terminal apparatus may send the second information by using some or all resources in the first resource pool. For example, the at least one second terminal apparatus may send the second information on the first time-frequency resource that is in the first resource pool. In this solution, the first terminal apparatus may determine, when the at least one second terminal apparatus sends the second information, resource occupation in the first resource pool, and notify the network apparatus of the resource occupation. In this way, the network apparatus may determine actual occupation, of resources that are in the first resource pool, by the terminal apparatus that is based on the LTE-V2X communication. It may be understood that the terminal apparatus based on the LTE-V2X communication may also report, to the network apparatus, actual occupation, of allocated resources, by the terminal apparatus that is based on the NR-V2X communication. In this way, the network apparatus may also determine the actual occupation, of the allocated resources, by the terminal apparatus that is based on the NR-V2X communication. Further, the network apparatus may flexibly adjust configured resources based on the actual occupation, of the allocated resources, by the terminal apparatus that is based on the LTE-V2X communication and/or the terminal apparatus that is based on the NR-V2X communication, to improve resource utilization.

In a possible implementation, the method further includes: The first terminal apparatus receives second configuration information from the network apparatus. The second configuration information is used for configuring a second resource pool. The second configuration information is determined based on the resource occupation information of the second information set in the first resource pool. The second resource pool is used by the first terminal apparatus to send the first information. In this solution, the network apparatus may adjust, based on the actual occupation, of the allocated resources, by the terminal apparatus that is based on the LTE-V2X communication, a resource pool configured for the terminal apparatus that is based on the NR-V2X communication, so that resources configured for the terminal apparatus that is based on the LTE-V2X communication and the terminal apparatus that is based on the NR-V2X communication are more appropriate, to improve the resource utilization. It may be understood that the network apparatus may also adjust, based on the actual occupation, of the allocated resources, by the terminal apparatus that is based on the NR-V2X communication, resources configured for the terminal apparatus that is based on the LTE-V2X communication, to improve the resource utilization.

In a possible implementation, the first time-frequency resource belongs to time-frequency resources where the first resource pool and a third resource pool overlap. The third resource pool is used by the at least one second terminal apparatus to send the second information. In this solution, the terminal apparatus based on the LTE-V2X communication and the terminal apparatus based on the NR-V2X communication may share a same time-frequency resource, to improve the resource utilization.

In a possible implementation, the resource occupation information includes resource usage. The resource usage is a ratio of a quantity of subchannels occupied by the second information set in a first measurement window to a total quantity of subchannels that are in the first resource pool and that are included in the first measurement window. A length of the first measurement window is configured, preconfigured, or predefined by the network device. The subchannels occupied by the second information set include a subchannel whose reference signal received power (reference signal received power, RSRP) value is greater than an RSRP threshold. The first RSRP threshold is configured, preconfigured, or predefined by the network apparatus. Alternatively, the subchannels occupied by the second information set include a subchannel whose received signal strength indicator RSSI value is greater than a first RSSI threshold. The first RSSI threshold is configured, preconfigured, or predefined by the network apparatus. In this solution, the first terminal apparatus may decode information received in the first measurement window, so that a quantity of subchannels occupied by each of the at least one second terminal apparatus in the first measurement window to send the second information can be determined, to determine the resource usage. In other words, the resource usage may be considered as actual occupation, of channels, that is when the terminal apparatus based on the LTE-V2X communication sends the second information.

In a possible implementation, a size of a time-frequency resource included in the second resource pool is related to the resource usage. In an example, the resource usage is greater than or equal to a first threshold. Time-frequency resources included in the second resource pool are fewer than time-frequency resources included in the first resource pool. It may be understood that larger resource usage indicates more time-frequency resources that need to be occupied by the at least one second terminal apparatus. Therefore, a small quantity of time-frequency resources may be configured for the first terminal apparatus. For example, a second resource pool reconfigured by the network apparatus for the first terminal apparatus includes fewer time-frequency resources. In this way, more time-frequency resources may be reserved for the second terminal apparatus. That is, the network device may more properly configure, based on the resource usage, time-frequency resources for the first terminal apparatus and the second terminal apparatus. It should be noted that, the first threshold may be configured, preconfigured, or predefined by the network apparatus. This is not limited in embodiments of this application.

In another example, the resource usage is greater than or equal to a second threshold. Frequency domain resources included in the second resource pool do not overlap with a first channel. The first channel includes frequency domain resources included in the first resource pool and frequency domain resources included in the third resource pool. In this solution, the first terminal apparatus and the second terminal apparatus share the first channel. When the resource usage is greater than or equal to the second threshold, it may be considered that the terminal apparatus based on the LTE-V2X communication needs more time-frequency resources. In this case, the network device may configure the first channel for only the second terminal apparatus. In other words, the second resource pool is not configured on the first channel, to meet a resource requirement of the second terminal apparatus as much as possible. It should be noted that, the second threshold may be configured, preconfigured, or predefined by the network apparatus. This is not limited in embodiments of this application.

In still another example, the resource usage $COR$ and a first proportion $R_{E-UTRA}^{NR}$ satisfy the following formula:

$$\alpha_1 \times COR \le R_{E-UTRA}^{NR} \le \alpha_2 \times COR$$, where $0 < \alpha_1 < \alpha_2 \le 1$. The first proportion is a proportion of frequency domain resources that are occupied on a first channel and that are in frequency domain resources of the second resource pool. The first channel includes frequency domain resources included in the first resource pool and frequency domain resources included in the third resource pool. In this solution, the first terminal apparatus and the second terminal apparatus share the first channel. The resource usage and the time-frequency resources included in the second resource pool satisfy the foregoing formula, so that time-frequency resources are more flexibly and properly allocated to the first terminal apparatus and the second terminal apparatus on the first channel, to further improve the resource utilization.

In a possible implementation, the second resource pool is further used by the second terminal apparatus to send the second information. In other words, the second resource pool configured by the network apparatus for the first terminal apparatus may also be shared with the second terminal apparatus to send the second information. In this scenario, the second configuration information further includes some parameters used by the first terminal apparatus to send the first information in the second resource pool. For example, the second configuration information may further include at least one of the following information: a priority value threshold, a second RSRP threshold, a channel occupation threshold, maximum transmit power, enabling information, or subchannel information. The first terminal apparatus may send, based on the at least one of the information, the first information in the second resource pool, to improve transmission reliability of the first information. For example, when a priority value of the first information is less than or equal to the priority value threshold, the first terminal apparatus sends the first information in the second resource pool. Alternatively, the first terminal apparatus sends the first information on a time-frequency resource, other than a time-frequency resource whose RSRP is greater than the second RSRP threshold, in the second resource pool. Alternatively, a channel occupation value obtained by the first terminal apparatus is less than the channel occupation threshold, to be specific, the first terminal apparatus has a small channel occupation value, to occupy or be allocated with a small quantity of subchannels. It may be understood that the channel occupation value is a ratio of a quantity of subchannels that have been occupied or allocated to and occupied by the first terminal apparatus in a second measurement window and that are in the second resource pool to a quantity of all subchannels that are in the second resource pool and that are included in the second measurement window. Alternatively, the first terminal apparatus determines, based on the maximum transmit power, transmit power used for sending the first information in the second resource pool. Alternatively, the first terminal apparatus receives the enabling information, and sends the first information in the second resource pool. Alternatively, the first terminal apparatus determines, based on the subchannel information, a quantity of subchannels used for sending the first information in the second resource pool.

According to a second aspect, a resource configuration method is provided. The method may be performed by a second communication apparatus. The second communication apparatus may be a communication device, or may be a communication apparatus, for example, a chip system that can support the communication device in implementing a function required by the method. The following describes an example in which the communication device is a network apparatus. The method includes the following steps.

The network apparatus sends first configuration information to a first terminal apparatus, and receives resource occupation information from the first terminal apparatus. The first configuration information indicates a first resource pool. The first resource pool is used by the first terminal apparatus to send first information, and the first information is information using NR radio access. The resource occupation information indicates resource occupation information of a second information set in the first resource pool. The second information set includes information that is from at least one second terminal apparatus and that is received by the first terminal apparatus on a first time-frequency resource included in the first resource pool. Second information is information using E-UTRA radio access.

In a possible implementation, the method further includes: The network apparatus sends second configuration information to the first terminal apparatus. The second configuration information is used for configuring a second resource pool. The second configuration information is determined based on the resource occupation information of a first information set in the first resource pool. The second resource pool is used by the first terminal apparatus to send the first information. The first information is the information using the NR radio access.

In a possible implementation, the first time-frequency resource belongs to time-frequency resources where the first resource pool and a third resource pool overlap. The third resource pool is used by the second terminal apparatus to send the second information. The first resource pool is used by the first terminal apparatus to send the first information.

In a possible implementation, the first time-frequency resource belongs to time-frequency resources where the first resource pool and a third resource pool do not overlap. The third resource pool is used by the second terminal apparatus to send the second information. The first resource pool is used by the first terminal apparatus to send the first information.

In a possible implementation, the resource occupation information includes resource usage. The resource usage is a ratio of a quantity of subchannels occupied by the second information set in a first measurement window to a total quantity of subchannels that are in the first resource pool and that are included in the first measurement window. A length of the first measurement window is configured, preconfigured, or predefined by the network apparatus. The subchannels occupied by the second information set include a subchannel whose reference signal received power (reference signal received power, RSRP) value is greater than a first RSRP threshold. The first RSRP threshold is configured, preconfigured, or predefined by the network apparatus. Alternatively, the subchannels occupied by the second information set include a subchannel whose received signal strength indicator RSSI value is greater than a first RSSI threshold. The first RSSI threshold is configured, preconfigured, or predefined by the network apparatus.

In a possible implementation, the resource usage is greater than or equal to a first threshold. Time-frequency resources included in the second resource pool are fewer than time-frequency resources included in the first resource pool. Alternatively, the resource usage is greater than or equal to a second threshold. Frequency domain resources included in the second resource pool do not overlap with a first channel. The first channel includes frequency domain resources included in the first resource pool and frequency domain resources included in the third resource pool. Alternatively, the resource usage COR and a first proportion $R_{E-UTRA}^{NR}$ satisfy the following formula:

$$\alpha_1 \times COR \leq R_{E-UTRA}^{NR} \leq \alpha_2 \times COR$$

, where $0 < \alpha_1 \leq \alpha_2 \leq 1$. The first proportion is a proportion of frequency domain resources that are occupied on a first channel and that are in frequency domain resources included in the second resource pool. The first channel includes frequency domain resources included in the first resource pool and frequency domain resources included in the third resource pool.

In a possible implementation, the second configuration information is further used for configuring a fourth resource pool. The fourth resource pool is used by the at least one second terminal apparatus to send the second information.

In a possible implementation, the second resource pool is further used by the at least one second terminal apparatus to send the second information. The second configuration information further includes at least one of the following information, and the at least one of the information is used by the first terminal apparatus to send the first information in the second resource pool. The at least one of the information may include a priority value threshold, a second RSRP threshold, a channel occupation threshold, maximum transmit power, enabling information, or subchannel information. A priority value of the first information is less than or equal to the priority value threshold, and the first terminal apparatus sends the first information in the second resource pool. The first terminal apparatus sends the first information on a time-frequency resource other than a time-frequency resource whose RSRP is greater than the second RSRP threshold in the second resource pool. A channel occupation value obtained by the first terminal apparatus is less than the channel occupation threshold, and the channel occupation value is a ratio of a quantity of subchannels that have been occupied or allocated to and occupied by the first terminal apparatus in a second measurement window and that are in the second resource pool to a quantity of all subchannels that are in the second resource pool and that are included in the second measurement window. The first terminal apparatus determines, based on the maximum transmit power, transmit power used for sending the first information in the second resource pool. The first terminal apparatus receives the enabling information, and sends the first information in the second resource pool. The first terminal apparatus determines, based on the subchannel information, a quantity of subchannels used for sending the first information in the second resource pool.

For technical effects achieved by the second aspect or the possible implementations of the second aspect, refer to the descriptions of the technical effects of the first aspect or the implementations of the first aspect. Details are not described herein again.

According to a third aspect, an embodiment of this application provides a communication apparatus. The communication apparatus has a function of implementing behavior in the method instance of the first aspect. For beneficial effects, refer to the descriptions of the first aspect. Details are not described herein again. The communication apparatus may be the first terminal apparatus in the first aspect, or the communication apparatus may be an apparatus, for example, a chip or a chip system that can support the first terminal apparatus in the first aspect in implementing a function required by the method provided in the first aspect.

In a possible design, the communication apparatus includes a corresponding means (means) or module configured to perform the method according to the first aspect. For example, the communication apparatus includes: A processing unit (which is sometimes also referred to as a processing module or a processor) and/or a transceiver unit (which is sometimes also referred to as a transceiver module or a transceiver). These units (modules) may perform a corresponding function in the method example of the first aspect. For details, refer to the detailed descriptions in the method example. Details are not described herein again.

According to a fourth aspect, an embodiment of this application provides a communication apparatus. The communication apparatus has a function of implementing behavior in the method instance of the second aspect. For beneficial effects, refer to the descriptions of the second aspect. Details are not described herein again. The communication apparatus may be the network apparatus in the second aspect, or the communication apparatus may be an apparatus, for example, a chip or a chip system that can support the network apparatus in the second aspect in implementing a function required by the method provided in the second aspect.

In a possible design, the communication apparatus includes a corresponding means (means) or module configured to perform the method according to the second aspect. For example, the communication apparatus includes: A processing unit (which is sometimes also referred to as a processing module or a processor) and/or a transceiver unit (which is sometimes also referred to as a transceiver module or a transceiver). These units (modules) may perform a corresponding function in the method example of the second aspect. For details, refer to the detailed descriptions in the method example. Details are not described herein again.

According to a fifth aspect, an embodiment of this application provides a communication apparatus.

The communication apparatus may be the communication apparatus in the third aspect or the fourth aspect in the foregoing embodiments, or may be a chip or a chip system disposed in the communication apparatus in the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program or instructions or the data, the communication apparatus performs the method performed by the first terminal apparatus in the foregoing method embodiments, or performs the method performed by the network apparatus in the foregoing method embodiments.

According to a sixth aspect, an embodiment of this application provides a communication apparatus. The communication apparatus includes an input/output interface and a logic circuit. The input/output interface is configured to input and/or output information. The logic circuit is configured to perform the method according to the first aspect or the second aspect.

According to a seventh aspect, an embodiment of this application provides a chip system. The chip system includes a processor, may further include a memory and/or a communication interface, and is configured to implement the method according to the first aspect or the second aspect. In a possible implementation, the chip system further includes a memory, configured to store a computer program. The chip system may include a chip, or may include a chip and another discrete component.

According to an eighth aspect, an embodiment of this application provides a communication system. The communication system includes the communication apparatus in the third aspect and the communication apparatus in the fourth aspect. Alternatively, the communication system includes the communication apparatus in the third aspect and the communication apparatus that is in the fifth aspect and that is configured to perform the method according to the second aspect. Alternatively, the communication system includes the communication apparatus in the fourth aspect and the communication apparatus that is in the fifth aspect and that is configured to perform the method according to the first aspect.

According to a ninth aspect, this application provides a computer-readable storage medium. The computer-readable storage medium stores a computer program; and when the computer program is run, the method according to the first aspect or the second aspect is implemented.

According to a tenth aspect, a computer program product is provided. The computer program product includes: Computer program code; and when the computer program code is run, the method according to the first aspect or the second aspect is performed.

For beneficial effects of the third aspect to the tenth aspect and the implementations thereof, refer to the descriptions of beneficial effects of the first aspect or the second aspect, or the first aspect or the second aspect and the implementations thereof.

## BRIEF DESCRIPTION OF DRAWINGS

FIG. 1 is a schematic diagram of physical slots and logical slots according to an embodiment of this application;

FIG. 2 is a schematic diagram of communication performed by terminal devices on which an LTE-V2X communication module and an NR-V2X communication module coexist;

FIG. 3 is a diagram of an architecture of an example of a communication system to which an embodiment of this application is applicable;

FIG. 4 is a schematic flowchart of a resource configuration method according to an embodiment of this application;

FIG. 5 is a schematic diagram of subchannels occupied by second information in a first resource pool according to an embodiment of this application;

FIG. 6 is a schematic diagram of resource pools of a first terminal device and a second terminal device according to an embodiment of this application;

FIG. 7 is a schematic diagram of a structure of a communication apparatus according to an embodiment of this application;

FIG. 8 is a schematic diagram of another structure of a communication apparatus according to an embodiment of this application;

FIG. 9 is a schematic diagram of a structure of an example of a communication apparatus according to an embodiment of this application; and

FIG. 10 is a schematic diagram of a structure of an example of another communication apparatus according to an embodiment of this application.

## DESCRIPTION OF EMBODIMENTS

For ease of understanding the technical solutions provided in embodiments of this application, some technical terms included in embodiments of this application are first explained and described.

(1) A network device is an access device that is used by a terminal device to access a mobile communication system in a wireless manner, for example, includes a radio access network (radio access network, RAN) device, for example, a base station. The network device may alternatively be a device that communicates with the terminal device over an air interface. For example, the network device may include an evolved NodeB (evolved NodeB) in an LTE system or a long term evolution-advanced (long term evolution-advanced, LTE-A) system, and may be referred to as an eNB or an e-NodeB for short. The eNB is an apparatus that is deployed in a radio access network and that meets the fourth generation (the fourth generation, 4G) standard and that provides a wireless communication function for the terminal device. The network device may alternatively be a new radio controller (new radio controller, NR controller), a gNodeB (gNodeB, gNB) in a 5G system, a centralized unit (centralized unit), a new radio base station, a remote radio module, a micro base station (which is also referred to as a small cell), a relay (relay), a distributed unit (distributed unit), a macro base station in various forms, a transmission reception point (transmission reception point, TRP), a transmission measurement function (transmission measurement function, TMF), a transmission point (transmission point, TP), or any other radio access device. However, embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU) or a remote radio unit (remote radio unit, RRU), or a wireless fidelity (wireless fidelity, Wi-Fi) access point (access point, AP), or a BBU pool (BBU pool) and an RRU that are in a cloud radio access network (cloud radio access network, CRAN). A specific technology and a specific device form that are used by the network device are not limited in embodiments of this application. The network device may correspond to an eNB in a 4G system, and may correspond to a gNB in a 5G system.

In addition, in embodiments of this application, a base station may include a centralized unit (centralized unit, CU) and a distributed unit (distributed unit, DU), and a plurality of DUs may be centrally controlled by one CU. The CU and the DU may be divided based on a protocol layer function of a wireless network that the CU and the DU have. For example, functions of a packet data convergence protocol (packet data convergence protocol, PDCP) layer and a protocol layer above the PDCP layer are set on the CU, and functions of a protocol layer below the PDCP layer, such as a radio link control (radio link control, RLC) layer and a media access control (media access control, MAC) layer, are set on the DU. It should be noted that, the protocol layer division is merely an example, and there may be division of other protocol layers. A radio frequency apparatus may not be disposed in the DU but is disposed remotely, may be integrated into the DU, or the radio frequency apparatus partially is disposed remotely and partially is integrated into the DU. This is not limited in embodiments of this application. In addition, in some embodiments, a control plane (control plane, CP) and a user plane (user plane, UP) of the CU may be further separated and implemented as different entities, including a control plane CU entity (CU-CP entity) and a user plane CU entity (CU-UP entity) respectively. In a network architecture, signaling generated by the CU may be sent to the terminal device via the DU, or signaling generated by the UE may be sent to the CU via the DU. The DU may transparently transmit the signaling to the terminal device or the CU by directly encapsulating the signaling at a protocol layer without parsing the signaling. In the network architecture, the CU is divided as a network device on a RAN side. In addition, the CU may alternatively be divided as a network device on a core network (core network, CN) side. This is not limited in this application.

(2) A terminal apparatus has a wireless transceiver function, and may send a signal to a network device, or receive a signal from the network device. The terminal apparatus may include user equipment (user equipment, UE), and sometimes may be also referred to as a terminal device, a terminal, an access station, a UE station, a remote station, a wireless communication device, a user apparatus, or the like. In embodiments of this application, unless otherwise specified, meanings of the terminal device and the terminal apparatus in the following are the same. The terminal device is configured to connect a person, an object, a machine, and the like, and may be widely used in various scenarios, including but not limited to the following scenarios: cellular communication, device-to-device (device-to-device, D2D) communication, V2X, machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, smart wearables, smart transportation, a smart city (smart city), an uncrewed aerial vehicle, a robot, and the like.

Foe example, the terminal device in embodiments of this application may be a mobile phone, a pad, a computer with a wireless transceiver function, a VR terminal, an AR terminal, a wireless terminal in the industrial control (industrial control), a wireless terminal in the self driving (self driving), a smart speaker in an IoT network, a wireless terminal device in the telemedicine, a wireless terminal device in the smart grid, a wireless terminal device in transportation security, a wireless terminal device in the smart city, a wireless terminal device in the smart home, or the like. By way of example, and not limitation, in embodiments of this application, the terminal device may alternatively be a wearable device. The wearable device may also be referred to as a wearable smart device, a smart wearable device, or the like, and is a general term of wearable devices for example, glasses, gloves, watches, clothes, and shoes that are intelligently designed and developed for daily wear by using a wearable technology.

The terminal device may further include a relay (relay). Alternatively, it may be understood that any device that can perform data communication with a base station may be considered as a terminal device. If various terminal devices described above are located in a vehicle (for example, placed inside the vehicle or installed inside the vehicle), the terminal devices may all be considered as in-vehicle terminal devices. For example, in-vehicle terminal devices are also referred to as on-board units (on-board units, OBUs). The terminal device in this application may alternatively be a vehicle-mounted module, a vehicle-mounted module, a vehicle-mounted component, a vehicle-mounted chip, or an on-board unit that is built in a vehicle as one or more components or units. The vehicle uses the vehicle-mounted module, the vehicle-mounted module, the vehicle-mounted component, the vehicle-mounted chip, or the on-board unit that is built in the vehicle, to implement a method in this application. Direct communication (PC5) interface communication is supported between terminal devices, in other words, transmission is supported through a sidelink.

In addition, in embodiments of this application, the terminal device may be an apparatus configured to implement a function of a terminal, or may be an apparatus, for example, a chip system that can support the terminal device in implementing the function. The apparatus may be installed in the terminal device. For example, the terminal device may alternatively be a vehicle sounder. In embodiments of this application, the chip system may include a chip, or may include a chip and another discrete component. In the technical solutions provided in embodiments of this application, an example in which the apparatus configured to implement the function of the terminal is the terminal device is used for describing the technical solutions provided in embodiments of this application.

(3) A sidelink (sidelink, SL) is a link established between devices of a same type, and may also be referred to as a side link, a secondary link, or the like, which is referred to as a sidelink in this specification. The link between the devices of a same type may be a link between terminal devices, a link between network devices, a link between relay nodes, or the like. This is not limited in embodiments of this application.

The link between the terminal devices includes a D2D link defined in 3GPP release (release, Rel)-12/13 and a V2X link defined in 3GPP for internet of vehicles. V2X includes vehicle-to-vehicle (vehicle-to-vehicle, V2V), vehicle-to-infrastructure (vehicle-to-infrastructure, V2I), and vehicle-to-pedestrian (vehicle-to-pedestrian, V2P) direct communication, and a vehicle-to-network (vehicle-to-network, V2N) or vehicle-to-everything V2X link, and includes V2X communication scenarios defined in Rel-14/15. The V2X further includes a V2X link based on an NR system, and the like that are currently being researched in 3GPP Rel-16 and subsequent releases. The V2V refers to communication between vehicles. The V2P refers to communication between a vehicle and people (including a pedestrian, a bicycle rider, a driver, or a passenger). The V2I refers to communication between a vehicle and a roadside infrastructure, for example, communication between a vehicle and a roadside unit or a road side unit (road side unit, RSU). In addition, one type of V2N may further be included in the V2I, where the V2N refers to communication between a vehicle and a base station/network. The RSU includes two types: an RSU of a terminal type, which is deployed on a road side, where the RSU of the terminal type is in a non-mobility state, and mobility does not need to be considered; and an RSU of a base station type, which may provide timing synchronization and resource scheduling for a vehicle that communicates with the RSU of the base station type.

(4) Listen before talk (listen before talk, LBT) is an avoidance mechanism for channel access, to enable a plurality of devices to share a same spectrum resource. There are two types of LBT. One is fixed-duration-based LBT. The other is fallback-based LBT. The fallback-based LBT may be considered as non-fixed-duration-based LBT. To be specific, a device randomly selects a value A in a contention window. After the device detects at least A idle slots, the device may determine that a channel is in an idle state, so that the device can occupy the channel. Otherwise, the device needs to contend for the channel again. An idle slot means that energy, of a signal, detected on a channel in one slot is less than a preset threshold. The fallback-based LBT is also referred to as Type 1 LBT.

The fixed-duration-based LBT means that a device performs detection based on fixed duration. Within the fixed duration, if energy of a signal detected on a channel is less than a preset threshold, the device considers that the channel is in an idle state, so that the device can occupy the channel. Otherwise, the device needs to contend for the channel again. The fixed-duration-based LBT is further classified into three types of LBTs: Type 2A LBT, Type 2B LBT, and Type 2C LBT. A difference between the Type 2A LBT, the Type 2B LBT, and the Type 2C LBT lies in different fixed duration for detection (which is referred to as fixed detection duration for short). Fixed detection duration of the Type 2A LBT is 9 μs within a gap (gap) of 25 μs. Fixed detection duration of the Type 2B LBT is at least 5 μs within a gap of 16 μs. When a value of a gap is less than 16 μs, Type 2C LBT does not need to be performed, and a channel is directly accessed. In this case, the device can perform transmission in only 584 μs.

(5) A resource pool (resource pool) is a set of time-frequency resources used by a terminal device to perform sidelink communication. Before sending information on a sidelink, the terminal device needs to determine a resource used for sending the information. In V2X, on a sidelink, communication may be performed by using a licensed spectrum (licensed spectrum), or may be performed by using an unlicensed spectrum (unlicensed spectrum), or may be performed by using both the licensed spectrum and the unlicensed spectrum. Sidelink-related protocol technologies of the unlicensed spectrum may be collectively referred to as a sidelink-unlicensed (SL-unlicensed, SL-U). There are mainly two modes for sidelink resource allocation: a mode (mode-1) in which a network device allocates a resource, and a mode (mode-2) in which a terminal device selects a resource. The mode-1 is mainly applied to V2X communication in a case of network coverage. The network device centrally allocates resources based on a buffer status report (buffer status report, BSR) reported by the terminal device. In the mode-2, resource transmission of the terminal device does not depend on the network device, and the mode is not limited to network coverage. Regardless of whether there is the network coverage, the terminal device may perform communication in the mode.

In the mode-1, resources may be allocated in a dynamic mode or a preconfiguration mode. In the dynamic mode of the mode-1, the network device allocates a resource to the terminal device by using downlink control information (downlink control information, DCI). After receiving the DCI, the terminal device sends information on the resource. In the preconfiguration mode of the mode-1, the network device configures, by using higher layer signaling, a related time-frequency resource used for sending on the sidelink. The terminal device may directly send data on the resource configured by using the higher layer signaling. Alternatively, the network device sends the DCI to activate the configured resource. After receiving the DCI, the terminal device may send the information on a resource configured by using the higher layer signaling.

In the mode-2, resource transmission of the terminal device does not depend on the network device. The network device may allocate a resource pool in advance, and the terminal device autonomously selects an available resource in the resource pool. For example, the terminal device senses (sense), in a resource sensing window, sidelink control information (sidelink control information, SCI) sent by another terminal device in the resource pool. The sensing may include a process of detecting the SCI, or may include a process of detecting the SCI, decoding the SCI, and measuring reference signal received power (reference signal received power, RSRP) of a resource based on an indication of the SCI. The terminal device autonomously selects a resource in a resource selection window based on a resource sensing result to send information.

The terminal device may send or receive, by using the resource in the resource pool, at least one of the following sidelink information including a sidelink channel or a sidelink signal. In the present invention, if there is no special case, information sent or received during communication between terminals is sidelink information. For example, the sidelink channel may be: a physical sidelink control channel (physical sidelink control channel, PSCCH), a physical sidelink shared channel (physical sidelink shared channel, PSSCH), a physical sidelink discovery channel (physical sidelink discovery channel, PSDCH), a physical sidelink feedback channel (physical sidelink feedback channel, PSFCH), or a physical sidelink broadcast channel (physical sidelink broadcast channel, PSBCH). The PSCCH may be used for carrying the SCI. The PSSCH may be used for carrying one or more of the following: control information, service data, sidelink channel state information (channel state information, CSI), or the like. Services carried on the PSSCH may include a unicast service, a multicast service, or a broadcast service. The PSDCH may be used for carrying a discovery message. The PSFCH may be used for carrying sidelink feedback information, and the sidelink feedback information may include feedback information for data information, where the feedback information is, for example, hybrid automatic repeat request (hybrid automatic repeat request, HARQ) acknowledgement information, for example, acknowledge (acknowledge, ACK) or negative acknowledge (negative acknowledge, NACK). The feedback information may further include one or more of the following information: CSI feedback information, energy saving information, or resource assistance information. The resource assistance information may indicate a resource recommended for use, a resource not recommended for use, a resource collision, a resource reservation collision, a half-duplex collision that occurred in the past, a half-duplex collision that is about to occur in the future, or the like. The PSBCH may be used for carrying information related to sidelink synchronization. The sidelink signal may be: a demodulation reference signal (demodulation reference signal, DMRS), a channel state information reference signal (channel state information reference signal, CSI-RS), a phase-tracking reference signal (phase-tracking reference signal, PT-RS), a positioning reference signal (Positioning reference signal, P-RS), and synchronization reference information (synchronization signal, SS) that includes a primary synchronization reference signal and a secondary synchronization reference signal.

In the case of coverage of the network device, the network device may configure the resource pool via a system information block (system information block, SIB), cell-specific (cell-specific) radio resource control (radio resource control, RRC) signaling, or UE-specific (UE-specific) RRC signaling. For example, the network device may send resource configuration information of a sidelink via the SIB, the cell-specific RRC signaling, or the UE-specific RRC signaling. The resource configuration information may indicate a resource pool and/or a sidelink bandwidth part (bandwidth part, BWP) configuration used for sidelink communication. In a case of no network coverage, the resource pool may be preconfigured. The resource configuration information may further include configuration information of the PSCCH. The configuration information of the PSCCH may include a quantity of symbols occupied by the PSCCH in one slot and a quantity of resource blocks (resource blocks, RBs) occupied by the PSCCH in one subchannel. Sidelink BWP configuration information may include one or more of the following information: resource pool information, bandwidth information, symbol information, subcarrier spacing information, or cyclic prefix information. The resource pool information may be used for configuring a quantity of resource pools included in a BWP. The bandwidth information may indicate a bandwidth used for the sidelink communication, for example, 20 megahertz (MHz), in other words, a bandwidth used for a sidelink is 20 MHz. The symbol information may indicate a start symbol position in one slot and a quantity of occupied consecutive symbols. The subcarrier spacing information may indicate a subcarrier spacing used for the sidelink communication. The cyclic prefix information may indicate a cyclic prefix used for the sidelink communication. In a possible configuration, the sidelink BWP configuration information may further include resource pool configuration information of the sidelink.

The resource pool includes one or more frequency domain units in frequency domain. A frequency domain unit may be a resource element (resource element, RE), an RB, a subchannel (subchannel), or the like. One subchannel may include one or more consecutive or interlaced (interlaced) RBs in frequency domain. For example, one subchannel may include 10, 12, 15, 20, 25, or 50 consecutive or interlaced RBs. For ease of description, unless otherwise specified, an example in which the frequency domain unit is the subchannel is used in this specification. The resource pool includes one or more time units in time domain. A time unit may be a symbol, a slot (slot), a mini-slot (mini-slot), a subframe, a frame, or the like. The one or more time units may be consecutive or discrete in time. For definitions of the symbol, the mini-slot, the slot, the subframe, and the frame in this specification, refer to the 3GPP technical specification (technical specification, TS) 38.211. Unless otherwise specified, an example in which the time unit is the slot is used in this specification.

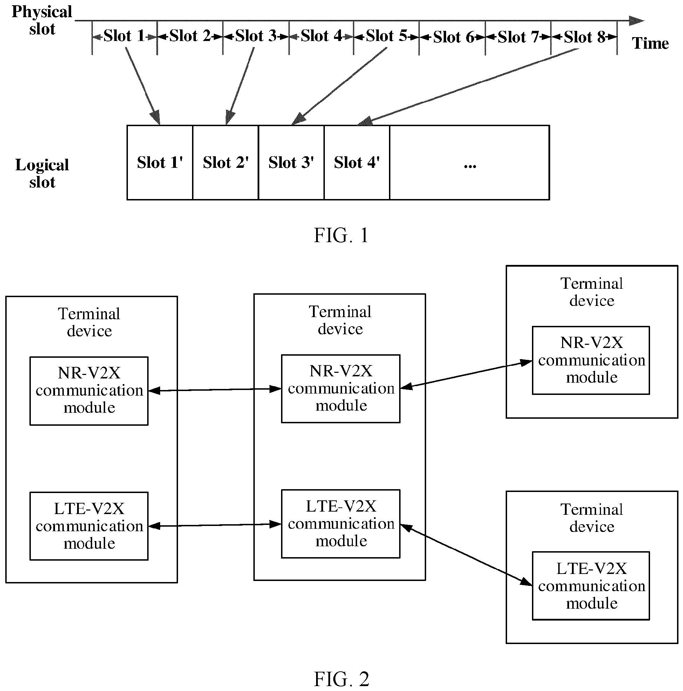

It should be noted that, the consecutive time units included in the resource pool in time domain may be physically consecutive, or may be logically consecutive. For example, FIG. 1 is a schematic diagram of physically consecutive slots and logically consecutive slots. FIG. 1 shows an example in which the physically consecutive slots are a slot 1 to a slot 8. The slot 1 to the slot 8 may also be referred to as physical slots. In the slot 1 to the slot 8, the slot 1, the slot 3, the slot 5, and the slot 8 are configured to belong to one resource pool. In other words, the resource pool includes the physical slot 1, the physical slot 3, the physical slot 5, and the physical slot 8. With regards to the resource pool, the resource pool includes four slots, and the four slots may be a slot 1', a slot 2', a slot 3', and a slot 4'. In other words, the resource pool includes four logically consecutive slots. It can be learned from FIG. 1 that the physical slot 1 is the slot 1' in the resource pool, the physical slot 3 is the slot 2' in the resource pool, the physical slot 5 is the slot 3' in the resource pool, and the physical slot 8 is the slot 4' in the resource pool. In other words, slots that are not physically consecutive may be logically consecutive. For ease of description, in this specification, slots that are logically consecutive but not necessarily physically consecutive may be referred to as logical slots (logical slots). A physical slot is referred to as a physical slot.

Further, the resource pool may also be classified into a sending resource pool and a receiving resource pool. To be specific, a terminal device performs sending in the sending resource pool, and performs receiving in the receiving resource pool. To ensure sidelink communication between two terminal devices, a sending resource pool in which a sending terminal device is located corresponds to a receiving resource pool in which a receiving terminal device is located, in other words, both time-frequency domain resources in the sending resource pool and the receiving resource pool and communication parameters configured in the resource pools are the same. For ease of description, in this specification, that the terminal device performs sending in a resource pool means that the terminal device performs sending in the sending resource pool. That the terminal device performs receiving in a resource pool means that the terminal device performs receiving in the receiving resource pool corresponding to the sending resource pool. In other words, for one sending resource pool, it is considered by default that there is one receiving resource pool corresponding to the sending resource pool. In this way, it can be ensured that the sending terminal device can communicate with the receiving terminal device.

(6) At least one" means one or more, and "a plurality of" means two or more. "And/or" is an association relationship for describing associated objects and represents that three relationships may exist. For example, A and/or B may represent the following three cases: Only A exists, both A and B exist, and only B exists, where A and B may be singular or plural. A character "/" generally indicates an "or" relationship between the associated objects. "At least one item (piece) of the following" or a similar expression thereof means any combination of these items, including any combination of singular items (pieces) or plural items (pieces). For example, at least one of a, b, or c may indicate: A, b, c, a-b, a-c, b-c, or a-b-c, where a, b, and c may be singular or plural.

In addition, unless otherwise stated, ordinal numbers such as "first" and "second" in embodiments of this application are used for distinguishing between a plurality of obj ects, but are not intended to limit an order, a time sequence, priorities, or importance of the plurality of objects. For example, a first terminal device and a second terminal device are merely used for distinguishing between different terminal devices, but do not indicate different priorities, importance, or the like of the two terminal devices. In embodiments of this application, "if" and "if" may be exchanged, and unless otherwise specified, "when" and "in a case" may be exchanged.

A priority of information is represented by a priority value. A smaller priority value of information indicates a higher priority of the information. For example, a priority value of the information may include {0, 1, 2, 3, 4, 5, 6, 7}. If the priority value of the information is 0, a priority of the information is highest. For example, a priority of to-be-sent information of a terminal device is higher than a priority threshold, in other words, a priority value of the to-be-sent information of the terminal device is less than a priority value (where the two may be exchanged unless otherwise specified).

The technical solutions provided in embodiments of this application may be applied to a 5G mobile communication system, for example, an NR system, or applied to an LTE system, or may be further applied to a next-generation mobile communication system or another similar communication system. In addition, the technical solutions provided in embodiments of this application may be applied to a link between a network device and a terminal device, or may be applied to a sidelink.

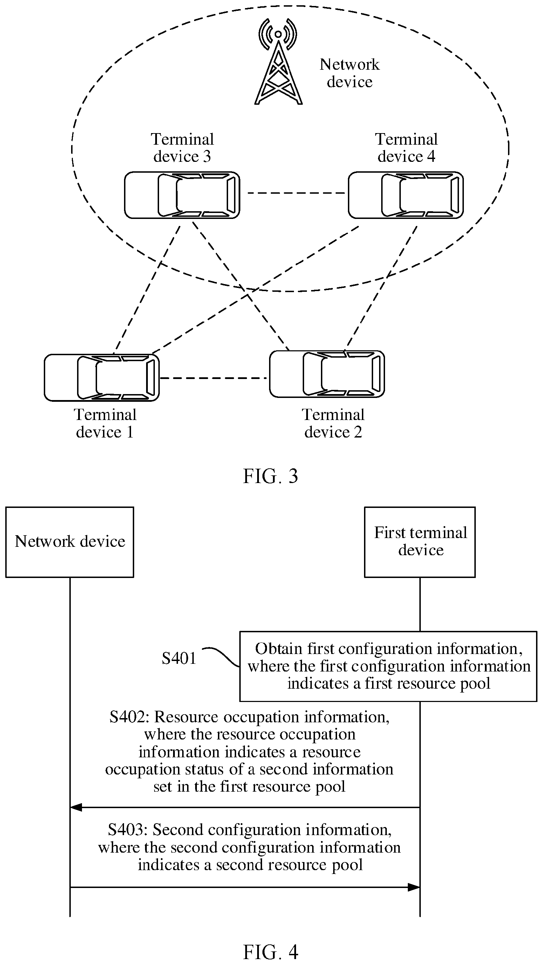

For example, FIG. 3 shows a network architecture to which an embodiment of this application is applied. In FIG. 1, four terminal devices and one network device are included. In FIG. 3, the terminal devices may perform communication when there is a network infrastructure or there is no network infrastructure. For ease of description, in this specification, an example in which the terminal devices in FIG. 1 are in-vehicle terminal devices is used, in other words, an example in which this embodiment of this application is applied to a V2X scenario is used. A specific form of a terminal device is not limited in embodiments of this application. For example, the terminal device may alternatively be a mobile phone, or the like. In FIG. 1, the four terminal devices are a terminal device 1, a terminal device 2, a terminal device 3, and a terminal device 4. Any one of the four terminal devices may send information to the remaining three surrounding terminal devices, or may receive information from the remaining three terminal devices. A quantity of terminal devices in FIG. 1 is merely an example. In actual application, the network device may provide services for a plurality of terminal devices. In FIG. 1, an example in which there is no network coverage for the terminal device 1 and the terminal device 2, and there is network coverage for the terminal device 3 and the terminal device 4 is used.

The four terminal devices in FIG. 1 include a terminal device on which an NR-V2X communication module is disposed, or may include a terminal device on which an LTE-V2X communication module is disposed, or may include a terminal device on which an LTE-V2X communication module and an NR-V2X communication module are disposed. In this specification, the terminal device on which the LTE-V2X communication module is disposed is also referred to as an LTE-V2X terminal device, the terminal device on which the NR-V2X communication module is disposed is also referred to as an NR-V2X terminal device, and the terminal device on which the LTE-V2X communication module and the NR-V2X communication module are disposed may also be considered as an NR-V2X terminal device.

The foregoing describes some technical terms in embodiments of this application and a network architecture to which an embodiment of this application is applicable. The following describes technical features included in embodiments of this application.

LTE-V2X supports basic safe autonomous driving. In comparison with the LTE-V2X, NR-V2X may further support advanced service autonomous driving, for example, support a lower transmission delay, more reliable communication transmission, a higher throughput, and better user experience, to meet a wider application scenario requirement. 3GPP successively standardizes the LTE-V2X and the NR-V2X. The LTE-V2X and the NR-V2X may be used together as an autonomous driving technology of cellular-vehicle to everything (Cellular-V2X, C-V2X).

NR-V2X standardized in 3GPP release 16 (release 16, R16) supports intra device coexistence (in-device coexistence co-existence). In other words, both an LTE-V2X communication module and an NR-V2X communication module may be disposed on a terminal device in 3GPP R16. For example, FIG. 2 is a schematic diagram of communication performed by terminal devices on which an LTE-V2X communication module and an NR-V2X communication module coexist. The LTE-V2X communication module may communicate with a terminal device on which LTE-V2X is disposed (which is also referred to as an LTE-V2X terminal device in this specification), and the NR-V2X communication module may communicate with a terminal device on which NR-V2X is disposed (which is also referred to as an NR-V2X terminal device in this specification). In other words, a terminal device in 3GPP R16 may communicate with a conventional LTE-V2X terminal device, and may also communicate with an NR-V2X terminal device. Optionally, the terminal device in 3GPP R16 may further coexist with an NR-V2X terminal device of a future newly released version. For example, the terminal device in 3GPP R16 sends information. An LTE-V2X communication module and an NR-V2X communication module that are on the terminal device in 3GPP R16 send the information in a time division multiplexing manner. It should be noted that, specific implementations of the LTE-V2X communication module and the NR-V2X communication module are not limited in this embodiment of this application. For example, an LTE-V2X communication module and an NR-V2X communication module that are included in a terminal device may be two independent communication modules, or may be one communication module integrating an LTE-V2X communication function and an NR-V2X communication function.

A network device may configure a resource used for sidelink communication. For example, the network device configures a resource pool (which is also referred to as an LTE-V2X resource pool) that is based on LTE-V2X communication and a resource pool (which is also referred to as an NR-V2X resource pool) that is based on NR-V2X communication. The LTE-V2X terminal device selects a resource from the LTE-V2X resource pool to perform LTE-V2X communication, and the NR-V2X terminal device selects a resource from the NR-V2X resource pool to perform NR-V2X communication. Optionally, the NR-V2X terminal device may alternatively select a resource from the LTE-V2X resource pool to perform LTE-V2X communication. Because the LTE-V2X communication module and the NR-V2X communication module cannot directly communicate with each other, to reduce or avoid interference between the LTE-V2X communication module and the NR-V2X communication module, the LTE-V2X resource pool and the NR-V2X resource pool are usually orthogonal. Optionally, the network device may configure independent resource pools for the LTE-V2X communication module and the NR-V2X communication module. When selecting the resource from the resource pool, the LTE-V2X terminal device or the NR-V2X terminal device may measure a resource in the resource pool, and determine, based on a measurement result, whether the resource is occupied. Further, the LTE-V2X terminal device or the NR-V2X terminal device may further report the measurement result to the network device, so that the network device adjusts, based on the measurement result, the resource pool for the LTE-V2X terminal device or the NR-V2X terminal device, for example, a resource size of the LTE-V2X resource pool or a resource size of the NR-V2X resource.

To improve resource utilization, a common resource pool (which is also referred to as a common resource pool) may be configured for the LTE-V2X communication module and the NR-V2X communication module. It may be understood that the common resource pool belongs to both the LTE-V2X resource pool and the NR-V2X resource pool. For example, the common resource pool may be configured for the LTE-V2X communication module and the NR-V2X communication module, and both the LTE-V2X terminal device and the NR-V2X terminal device may select resources from the common resource pool to perform communication. When selecting the resource from the resource pool, the LTE-V2X terminal device or the NR-V2X terminal device may measure a resource in the resource pool, and determine, based on a measurement result, whether the resource is occupied. Further, the LTE-V2X terminal device or the NR-V2X terminal device may further report the measurement result to the network device, so that the network device adjusts, based on the measurement result, a parameter used by the LTE-V2X terminal device or the NR-V2X terminal device to send information, for example, a quantity of occupied channels and a quantity of retransmission times. The network device may further adjust a resource size of the LTE-V2X resource pool or a resource size of a NR-V2X resource.

Currently, the LTE-V2X terminal device or the NR-V2X terminal device measures the resource, and actually measures an RSSI of the resource, to represent resource occupation. Because the LTE-V2X terminal device or the NR-V2X terminal device measures the RSSI, although the RSSI can represent the resource occupation, the RSSI cannot indicate whether the resource is occupied by the LTE-V2X terminal device or the NR-V2X terminal device. It may be understood that, after receiving the measurement result of the resource, the network device does not know whether a current resource is occupied by the LTE-V2X terminal device or the NR-V2X terminal device. In other words, the network device cannot learn of resource usage of the LTE-V2X terminal device or the NR-V2X terminal device, and therefore cannot configure an appropriate resource for the LTE-V2X terminal device or the NR-V2X terminal device based on an actual resource usage of the LTE-V2X terminal device or the NR-V2X terminal device. Consequently, the resource utilization is low.

In view of this, embodiments of this application provide a technical solution. In this solution, an LTE-V2X terminal device and an NR-V2X terminal device may share a same time-frequency resource to send information. The NR-V2X terminal device decodes information received on a resource, to determine actual resource occupation of information received based on an LTE-V2X communication module. To be specific, the NR-V2X terminal device decodes the received information, and may determine that the resource is occupied by information sent based on the LTE-V2X communication module or the resource is occupied by information sent based on an NR-V2X communication module, to report, to a network device, resource occupation that is obtained through measurement based on the LTE-V2X communication module and that is of the information sent based on the LTE-V2X communication module. The network device may adjust, based on a measurement result, a resource configured for sending second information based on the LTE-V2X communication module or sending first information based on the NR-V2X communication module, to improve resource utilization.

The information sent based on the NR-V2X communication module is information based on NR radio access. The information sent based on the LTE-V2X communication module is information based on E-UTRA radio access. For ease of description, in this specification, the information based on the NR radio access is referred to as the first information. The information based on the E-UTRA radio access is referred to as the second information. It may be understood that NR-based radio access means that an NR technology defined in 3GPP is used for wireless communication, where the NR technology includes channels and/or signals defined by using NR. E-UTRA-based radio access refers to that an E-UTRA technology (namely, an LTE technology) defined in 3GPP is used for wireless communication, where the LTE technology includes channels and/or signals defined by using LTE.

For ease of description, in the following, terminal devices that may send the first information are collectively referred to as a first terminal device, and terminal devices that may send the second information are collectively referred to as a second terminal device. It may be understood that the NR-V2X communication module is disposed on the first terminal device, to send the first information and receive first information sent by another terminal device. The LTE-V2X communication module may also be disposed on the first terminal device, to send the second information and receive second information sent by another terminal device. The second terminal device may send the second information, and receive second information sent by another terminal device. It may be understood that the first information belongs to sidelink information, including a sidelink channel or a sidelink signal. The second information belongs to sidelink information, including a sidelink channel or a sidelink signal.

It may be understood that when the NR-V2X terminal device on which the NR-V2X communication module is disposed sends or receives the first information, the NR-V2X terminal device belongs to the first terminal device. Optionally, when the NR-V2X terminal device on which the LTE-V2X communication module is disposed receives the second information, the NR-V2X terminal device also belongs to the first terminal device. When the NR-V2X terminal device on which the LTE-V2X communication module is disposed sends the second information, the NR-V2X terminal device belongs to the second terminal device. The LTE-V2X terminal device belongs to the second terminal device when sending or receiving the second information.

In embodiments of this application, the first terminal device and the second terminal device may share a resource, and the network device may adjust, based on resource occupation of the second terminal device, a resource configured for the first terminal device to send the first information or the second terminal device to send the second information, to improve the resource utilization. For example, a resource pool used by the first terminal device to send the first information is a first resource pool, and the network device may adjust the first resource pool to a second resource pool based on the resource occupation of the second information sent by the second terminal device. Similarly, a resource pool used by the second terminal device to send the second information is a third resource pool, and the network device may adjust the third resource pool to a fourth resource pool based on the resource occupation of the second information sent by the second terminal device. The following uses this case as an example. It may be understood that time-frequency resources in the first resource pool and time-frequency resources in the third resource pool may partially or completely overlap, or the first resource pool and the third resource pool may be one resource pool, or the first resource pool and the third resource pool do not have overlapping time-frequency resources. Based on specific implementations of the first resource pool and the third resource pool, implementations of the second resource pool and the fourth resource pool are also different. Related content is described below.

With reference to the accompanying drawings, the following describes the technical solutions provided in embodiments of this application.

FIG. 4 shows a communication method according to an embodiment of this application. The following describes an example in which the method is applied to the network architecture shown in FIG. 3. In addition, the method may be performed by two communication apparatuses. The two communication apparatuses are, for example, a first communication apparatus and a second communication apparatus. The first communication apparatus may be a terminal device, or a communication apparatus that can support the terminal device in implementing a function required by the method, or certainly may alternatively be another communication apparatus, for example, a chip system. The second communication apparatus may be a network device, or a communication apparatus that can support the network device in implementing a function required by the method, or certainly may alternatively be another communication apparatus, for example, a chip system. In addition, implementations of the first communication apparatus and the second communication apparatus are not limited. For example, the first communication apparatus may be the terminal device, and the second communication apparatus is the network device. Alternatively, the first communication apparatus is the communication apparatus that can support the terminal device in implementing the function required by the method, and the second communication apparatus is the network device; and so on.

For ease of description, in the following, an example in which the method is performed by the terminal device and the network device is used. In other words, an example in which the first communication apparatus is the terminal device and the second communication apparatus is the network device is used. If this embodiment is applied to the network architecture shown in FIG. 3, the terminal device described below may be the terminal device in the network architecture shown in FIG. 3, and the network device described below may be the network device in the network architecture shown in FIG. 1. It should be noted that, that this embodiment of this application is performed by the terminal device and the network device is merely used as an example, which is not limited to one terminal device. For example, this embodiment of this application may alternatively be performed by more terminal devices. When the more terminal devices are included, each of the more terminal devices performs a same procedure.

S401: A first terminal device obtains first configuration information, where the first configuration information indicates a first resource pool.

The first resource pool may be considered as a resource pool configured by the network device for a terminal device to send first information. In other words, the first resource pool is used for sending the first information. The network device may send, to the first terminal device, the first configuration information indicating the first resource pool. Before sending the first information, the first terminal device may determine the first resource pool based on the received first configuration information. Alternatively, the first resource pool may be a resource pool allocated by the network device based on a mode-2. Before sending the first information, the first terminal device may obtain the first configuration information indicating the first resource pool, to determine the first resource pool.

In addition to the first terminal device, there may be a second terminal device in a network. The network device also needs to configure a resource pool for the second terminal device to send second information. For example, the network device may configure a third resource pool, and the third resource pool is used by the second terminal device to send the second information. A manner in which the network device configures the third resource pool is similar to a manner in which the network device configures the first resource pool. Details are not described herein again.

To improve resource utilization, time-frequency resources included in the first resource pool and time-frequency resources included in the third resource pool may partially or completely overlap. For example, frequency domain resources included in the first resource pool and frequency domain resources included in the third resource pool belong to a same frequency band (which is referred to as a first channel in this specification). It may be understood that the first resource pool and the third resource pool may alternatively be a same resource pool. In this case, an information element included in configuration information used for configuring the first resource pool and an information element included in configuration information used for configuring the third resource pool may be the same, or this is understood as that the configuration information used for configuring the first resource pool is the configuration information used for configuring the third resource pool. In other words, one resource pool may be configured, based on same configuration information, for both the first terminal device and the second terminal device. For example, the network device may configure the first resource pool (or the third resource pool) based on the first configuration information. The first terminal device and the second terminal device obtain the first configuration information, and may separately determine the first resource pool (or the third resource pool) based on the first configuration information.

The first terminal device may send the first information in the first resource pool, and the second terminal device sends the second information in the third resource pool. In a possible scenario, the first resource pool and the third resource pool have (partially or completely) overlapping time-frequency resources, and the overlapping time-frequency resources include a first time-frequency resource. The first terminal device may receive, on the first time-frequency resource, the second information sent by the second terminal device on the first time-frequency resource. It may be understood that when the second terminal device sends the second information to the first terminal device, the second terminal device sends the second information on the first time-frequency resource, and the first terminal device receives the second information on the first time-frequency resource.

The first terminal device and the second terminal device each select a resource in a configured resource pool, to send information. The first terminal device and the second terminal device may each measure an RSSI of a resource in the configured resource pool, to determine occupation of the resource. However, the RSSI can only indicate a case in which the resource is occupied, and cannot indicate whether the resource is occupied by the first terminal device or the second terminal device. Therefore, the network device does not know actual occupation, of resources on the first channel, by the first terminal device and the second terminal device. Therefore, in this embodiment of this application, the first terminal device may decode the second information from at least one second terminal device, and measure RSRP or an RSSI of a resource occupied by the second information, to determine a quantity of subchannels occupied for sending the second information, and further determine an actual occupation of the first channel for sending the second information. After determining the actual occupation of the first channel for sending the second information, the first terminal device may notify the network device. The network device determines the actual occupation, of the first channel, by a second signal, and may adjust, based on the occupation, resource pools/a resource pool configured for the first terminal device and/or the second terminal device, to properly allocate resources to the first terminal device and the second terminal device, so that the resource utilization is improved, to improve a system throughput and reliability. It may also be considered that the actual occupation, of the first channel, by the second information is used by the network device to adjust the resource pools allocated to the first terminal device and the second terminal device, or is used by the network device to reconfigure resource pools for the first terminal device and the second terminal device.

It should be noted that, the first terminal device and the second terminal device separately send or receive information in resource pools, where time-frequency resources of one resource pool are orthogonal to those of the other one resource pool, in other words, the first resource pool and the third resource pool do not have overlapping time-frequency resources. In other words, only the first information can be sent on a time-frequency resource corresponding to the first resource pool, and only the second information can be sent on a time-frequency resource corresponding to the third resource pool. In this embodiment of this application, the first time-frequency resource may belong to time-frequency resources in the first resource pool, or the first time-frequency resource may belong to time-frequency resources in the third resource pool, or the first time-frequency resource includes a time-frequency resource where the first resource pool and the third resource pool overlap.

In this case, the first terminal device measures an RSSI or RSRP of a resource in the first resource pool, and may obtain resource usage of time-frequency resources occupied by the first information in the first resource pool. The first terminal device measures an RSSI or RSRP of a resource in the third resource pool, and may obtain resource usage of time-frequency resources occupied by the second information in the third resource pool. The first terminal device may notify the network device of a channel occupation of the first resource pool, namely, the resource usage of the time-frequency resources occupied by the first information in the first resource pool. The first terminal device may further notify the network device of a channel occupation of the third resource pool, namely, the resource usage of the time-frequency resources occupied by the second information in the third resource pool. In this way, the network device may obtain resource utilization of the first resource pool and/or resource utilization of the first resource pool of the third resource pool, and may adjust a size of the time-frequency resource in the first resource pool based on the actual resource usage in the first resource pool. Optionally, the network device may further adjust a size of the time-frequency resource in the second resource pool, to properly allocate resources to the first terminal device and the second terminal device, so that the resource utilization is improved, to improve the system throughput and the reliability.

In this embodiment of this application, the actual occupation, of the first channel, by the second information may be represented by a ratio of the time-frequency resources occupied by the second information in the first resource pool, or a ratio of the time domain resources or the frequency domain resources occupied by the second information in the first resource pool. For ease of description, in the following, resource usage of the time domain resources or the frequency domain resources occupied by the second information in the first resource pool is used as an example. A specific name of the resource usage is not limited in embodiments of this application. For example, the resource usage is used for representing an actual status of resources occupied by the second information. Correspondingly, the resource usage may also be referred to as an E-UTRA channel occupancy ratio (E-UTRA channel occupancy ratio, ECOR).

The following describes how the first terminal device determines the resource usage.

The first terminal device may determine a first measurement window, and determine the resource usage by using the first measurement window as a reference. For example, the resource usage may be a ratio of a quantity of subchannels whose RSRP values are greater than a first RSRP threshold and that are in subchannels occupied by a second information set measured by the first terminal device in the first measurement window to a total quantity of subchannels that are in the first resource pool and that are included in the first measurement window (this is used as an example below). Alternatively, the resource usage may be a ratio of a quantity of subchannels whose RSSI values are greater than a first RSSI threshold and that are in subchannels occupied by a second information set measured by the first terminal device in the first measurement window to a total quantity of subchannels that are in the first resource pool and that are included in the first measurement window. The second information set measured by the first terminal device in the first measurement window may be a set of the second information sent by the at least one second terminal device, or may be a set of second information sent by all other terminal devices in the first resource pool in the first measurement window. The first measurement window may be determined by the first terminal device according to a preset rule. For example, the first terminal device obtains, in a slot n, resource occupation of the second information in the first resource pool. In this case, a start position of the first measurement window may be a slot n-a, and an end position of the measurement window may be a slot n-b. In other words, the first measurement window may be all slots included in [n-a, n-b]. Values of a and b are not limited in this embodiment of this application, where a and b may be integers. For example, a and b may be positive numbers, and a value of a may alternatively be 0. A and b may be equal, or b may be less than a. For example, b=1, and the value of a is related to a subcarrier spacing used by the first terminal device. For example, a larger subcarrier spacing used for sidelink communication indicates a larger value of a, and a=X or X·2$^{\mu}$, where a value of X may be 50, 100, 200, 300, 400, 500, 1000, or the like. When the subcarrier spacing is separately 15 kHz, 30 kHz, 60 kHz, 120 kHz, and 240 kHz, a value of $\mu$ is 0, 1, 2, 3, and 4. A size of the first measurement window may be represented by absolute time, for example, a second or a millisecond, or may be represented by a slot. The slot may be a physical slot, or may be a logical slot in the first resource pool. This is not limited in embodiments of this application. Optionally, the first measurement window may include boundaries n-a and/or n-b, or may not include n-a and n-b.

It should be understood that the first terminal device may receive, in the first measurement window, at least one piece of second information, or may receive at least one piece of first information. The first terminal device may decode all sidelink information received in the first measurement window. Because the first information and the second information are based on different radio access, and the first information and the second information have different formats and include different information content, the first terminal device may distinguish whether received information is the first information or the second information. To be specific, the first terminal device decodes all information received in the first measurement window, and may determine information, in all the information received in the first measurement window, that is the second information. For example, the first terminal device decodes the received sidelink information, and may determine the sidelink information. For example, the first terminal device may obtain a PSCCH included in the sidelink information, and determine, based on an information format of the PSCCH and information content included in the PSCCH, whether the PSCCH is based on NR radio access or E-UTRA radio access, in other words, determine whether the sidelink information is the first information or the second information. In addition, the first terminal device may further obtain, based on a SCI carried by the PSCCH, time domain resource information and frequency domain resource information that are of the PSSCH scheduled by using the SCI, and a reference signal, for example, a DMRS, carried by the PSSCH. The frequency domain resource information of the PSSCH may include a quantity of subchannels occupied by the PSSCH, and the DMRS occupies all the subchannels occupied by the PSSCH. It may be understood that the time domain resource information of the PSSCH indicates a slot in which PSSCH transmission is performed. The first terminal device may measure RSRP values of the subchannels occupied by the PSSCH, and determine a subchannel whose RSRP value is greater than the first RSRP threshold as a subchannel occupied by the second information. It may be understood that the RSRP values of the subchannels occupied by the PSSCH are obtained by the first terminal device by measuring RSRP of the DMRS carried by the PSSCH. A quantity of subchannels whose RSRP values are greater than the first RSRP threshold and that are measured in the first measurement window is denoted as $N_{subCH}^{E-UTRA}$, namely, the quantity of subchannels occupied by the second information set. Optionally, the quantity of subchannels occupied by the second information set may alternatively be a quantity of subchannels whose RSSI values are greater than the first RSSI threshold and that are measured in the first measurement window. The resource usage is $N_{subCH}^{E-UTRA}/N_{subCH}^{RP}$, where $N_{subCH}^{RP}$ is the total quantity of subchannels that are in the first resource pool and that are included in the first measurement window. The first RSRP threshold or the first RSSI threshold may be a possible value configured, preconfigured, or predefined by the network device.

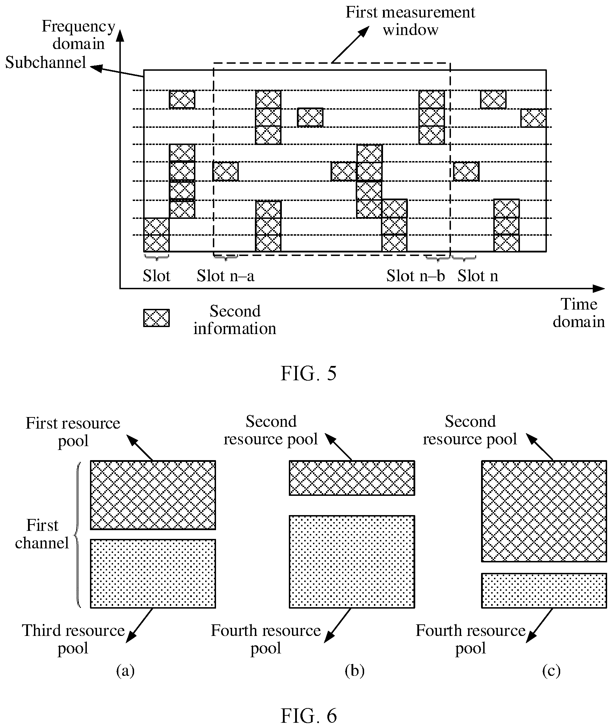

For ease of understanding, FIG. 5 is a schematic diagram of subchannels occupied by a second information set in a first resource pool. In FIG. 5, an example in which a first terminal device measures, in a slot n, the subchannels occupied by the second information set, and the first measurement window is [n-a, n-b] (where a dashed line is used for illustration in FIG. 5) is used. As shown in FIG. 5, resource usage is a ratio of a total quantity of subchannels occupied by the second information set in the dashed line box in FIG. 5 to a total quantity of subchannels included in the dashed line box.

It should be noted that, $N_{subCH}^{E-UTRA}$ does not include sub-channels that have been counted. For example, the first terminal device decodes received first SCI in a slot m of the first measurement window, and determines that RSRP of DMRSs carried by PSSCHs of a first subchannel and a second subchannel that are in the first resource pool exceed a first RSRP threshold. However, the first terminal device decodes received second SCI in the first measurement window, and determines that RSRP of DMRSs carried by PSSCHs of the second subchannel, a third subchannel, and a fourth subchannel that are in the first resource pool exceed the first RSRP threshold. Although the second subchannel is indicated by two different pieces of SCI, subchannels indicated by the two pieces of SCI are a same subchannel. Therefore, the second subchannel is counted only once. In this case, subchannels whose RSRP exceed the first RSRP threshold in the slot m are the first subchannel, the second subchannel, the third subchannel, and the fourth subchannel, in other words, a total quantity of subchannels whose RSRP exceed the first RSRP threshold is 4. For another example, the first terminal device decodes received first SCI in a slot m of the first measurement window, and determines that RSSIs of a first subchannel and a second subchannel that are in the first resource pool exceed a first RSSI threshold. However, the first terminal device decodes received second SCI in the first measurement window, and determines that RSSIs of the second subchannel, a third subchannel, and a fourth subchannel that are in the first resource pool exceed the first RSSI threshold. Although the second subchannel is indicated by two different pieces of SCI, subchannels indicated by the two pieces of SCI are a same subchannel. Therefore, the second subchannel is counted only once. In this case, subchannels whose RSSIs exceed the first RSSI threshold in the slot m are the first subchannel, the second subchannel, the third subchannel, and the fourth subchannel, in other words, a total quantity of subchannels whose RSSIs exceed the first RSSI threshold is 4.

S402: The first terminal device sends resource occupation information to the network device, and correspondingly, the network device receives the resource occupation information from the first terminal device.

The resource occupation information may indicate resource occupation of the second information set in the first resource pool. For example, the resource occupation information may include the foregoing resource usage. When the network device receives the resource occupation information, the network device may consider that the resource usage indicated by the resource occupation information is a ratio of resources used by the second terminal device (the second information) to resources included in the first resource pool. The resource occupation information may be carried in uplink control information (uplink control information, UCI), RRC signaling, or other signaling reported by the terminal device to the network device.

S403: The network device sends second configuration information to the first terminal device, and correspondingly, the first terminal device receives the second configuration information from the network device.

The second configuration information may be considered as configuration information determined by the network device based on the resource occupation information. The second configuration information may be used for configuring the second resource pool, and the second resource pool is used by the first terminal device to send the first information. The second resource pool may be a resource pool specifically configured for the first terminal device, or may be a common resource pool. The common resource pool is used for sending the first information and the second information. For example, the second resource pool and a fourth resource pool are one resource pool, and the second resource pool is the common resource pool.

In a possible scenario, the second resource pool may be a resource pool specifically configured for the first terminal device. It is assumed that the time-frequency resources included in the first resource pool and the time-frequency resources included in the third resource pool partially or completely overlap. The network device may adjust, based on the resource occupation information, a size of a resource configured for the first terminal device. In other words, the size of the time-frequency resource included in the second resource pool is related to the resource usage. For example, larger resource usage indicates more time-frequency resources occupied by the second information. In this case, the network device may allocate a small quantity of time-frequency resources for sending the first information, to reserve plenty of time-frequency resources for sending the second information. Alternatively, it may be considered that the network device may adjust, based on actual occupation, of allocated resources, by the second information, resources allocated for sending the first information. In this way, resources can be more properly configured for a terminal device that is based on LTE-V2X communication and a terminal device that is based on NR-V2X communication, to improve the resource utilization. It may be understood that the network device may also adjust, based on actual occupation, of allocated resources, by the first information, resources configured for the terminal device that sends the second information. For example, the second configuration information is further used for configuring the fourth resource pool, and the fourth resource pool is used by the second terminal device to send the second information. Alternatively, the network device may send, to the second terminal device, configuration information used for configuring the fourth resource pool. The following uses an example in which the network device configures the second resource pool for the first terminal device based on resource usage of the second information. For example, the following several adjustment manners are included.

In an adjustment manner 1, the resource usage is greater than or equal to a first threshold. Time-frequency resources included in the second resource pool are fewer than time-frequency resources included in the first resource pool. It may be understood that larger resource usage indicates more time-frequency resources that need to be occupied for sending the second information. Therefore, a small quantity of time-frequency resources may be configured for the first terminal device. In other words, a second resource pool reconfigured by the network device for a first terminal apparatus includes fewer time-frequency resources. In this way, more time-frequency resources can be reserved for the terminal device that sends the second information, to meet an actual requirement for sending the second information. It should be noted that, the first threshold may be configured, preconfigured, or predefined by the network apparatus. This is not limited in embodiments of this application. Otherwise, the resource usage is less than a first threshold, and time-frequency resources included in the second resource pool are more than time-frequency resources included in the first resource pool. In other words, when a small quantity of time-frequency resources need to be occupied for sending the second information, a large quantity of time-frequency resources may be configured for the first terminal device.

For ease of understanding, FIG. 6 is a schematic diagram of resource pools of a first terminal device and a second terminal device. In FIG. 6, frequency domain resources included in a first resource pool of the first terminal device and frequency domain resources included in a third resource pool of the second terminal device belong to a first channel. (a) in FIG. 6 shows the first resource pool and the third resource pool that are initially configured by a network device, (b) in FIG. 6 shows a second resource pool and a fourth resource pool that are reconfigured by the network device based on resource usage, and the resource usage in (b) in FIG. 6 is large. (c) in FIG. 6 also shows a second resource pool and a fourth resource pool that are reconfigured by the network device based on resource usage. A difference between (b) and (c) in FIG. 6 lies in that the resource usage in (c) in FIG. 6 is low. It can be learned from FIG. 6 that, according to the method provided in embodiments of this application, the network device may clearly determine resource usage for sending first information and sending second information, to more flexibly and properly adjust, based on the resource usage, the resource pools allocated to the first terminal device and the second terminal device, to improve resource utilization.

In an adjustment manner 2, the resource usage is greater than or equal to a second threshold, and frequency domain resources included in the second resource pool do not overlap with a first channel. The first channel includes frequency domain resources included in a first resource pool and frequency domain resources included in a third resource pool, in other words, the first terminal device and the second terminal device share the first channel. When the resource usage is greater than or equal to the second threshold, it may be considered that the second terminal device needs more time-frequency resources. In this case, the network device may configure the first channel for only the second terminal device. In other words, the second resource pool is not configured on the first channel, to meet a resource requirement of the second terminal device as much as possible. It should be noted that, the second threshold may be configured, preconfigured, or predefined by the network apparatus. This is not limited in embodiments of this application.

In an adjustment manner 3, the resource usage $COR$ and a first proportion $R_{E-UTRA}^{NR}$ satisfy the following formula:

$$\alpha_1 \times COR \leq R_{E-UTRA}^{NR} \leq \alpha_2 \times COR$$

, where $0 < \alpha_1 \leq \alpha_2 \leq 1$. The first proportion is a proportion of frequency domain resources that are occupied on a first channel and that are in frequency domain resources of the second resource pool. $\alpha_1$ and $\alpha_2$ in the foregoing formula may be considered as adjustment factors of the resource usage. To be specific, after obtaining the resource usage, the network device may adjust the resource usage, and determine the second resource pool based on an adjusted resource usage. Therefore, time-frequency resources are more flexibly adjusted and allocated to the first terminal device and the second terminal device.

It should be noted that, an information element included in the second configuration information used for configuring the second resource pool and an information element included in the first configuration information used for configuring the first resource pool may be the same. It may also be considered that configuration information used for configuring the second resource pool is configuration information used for configuring the first resource pool.

In another possible scenario, the second resource pool may be a common resource pool. To be specific, some time-frequency resources in the second resource pool configured by the network device for the first terminal device may also be used by the second terminal device to send the second information. For example, the second resource pool and the fourth resource pool are one resource pool. In this case, the network device may further adjust, based on the resource usage, a parameter used by the first terminal device to send the first information, to reduce interference of the first information to receiving of the second information by another terminal apparatus, and ensure reliability of the second information. For example, the second configuration information further includes some parameters used by the first terminal apparatus to send the first information in the second resource pool. For example, the second configuration information may further include at least one of the following information: a priority value threshold, a second RSRP threshold, a channel occupation threshold, maximum transmit power, enabling information, or subchannel information. The first terminal device may send the first information in the second resource pool based on the at least one of the information, to reduce the interference of the first information to the receiving of the second information by another terminal apparatus, and ensure the reliability of the second information. For example, that the first terminal device may send the first information in the second resource pool based on the at least one of the information includes the following several example cases.

Example 1: When a priority value of the first information is less than the priority value threshold, the first terminal device sends the first information in the second resource pool. It may be understood that the resource usage is inversely proportional to the priority value threshold. To be specific, when the resource usage is large, the second terminal device needs to occupy a large quantity of resources to send the second information in the second resource pool. Therefore, the first terminal device should avoid sending the first information in the second resource pool as much as possible. In this way, a small quantity of resources can be occupied, and more resources can be reserved for the second terminal to send the second information. If a priority of to-be-sent first information of the first terminal device is low, in other words, the priority value of the first information is higher than or equal to the priority value threshold, the first information cannot be sent in the second resource pool. In this way, a quantity of first terminal devices that send the first information in the second resource pool can be controlled, and the interference of the first information to the receiving of the second information by another terminal apparatus can be reduced. If the priority of the to-be-sent first information of the first terminal device is high, in other words, the priority value of the first information is lower than the priority value threshold, to avoid affecting service transmission of the first terminal device, the first terminal device may preferentially send the first information in the second resource pool rather than preferentially consider the interference of the first information to the receiving of the second information by another terminal apparatus.

Example 2: In a process of performing sense and resource selection in the second resource pool, the first terminal device sends the first information on a time-frequency resource other than a time-frequency resource whose RSRP is greater than the second RSRP threshold.

It may be understood that the resource usage is inversely proportional to the second RSRP threshold. When the resource usage is large, a large quantity of resources need to be occupied when the second terminal device sends the second information in the second resource pool. In this case, resources that may be used by the first terminal device should be reduced, to reserve a large quantity of available resources for the second terminal device. In this example, a threshold for determining an idle resource by the first terminal device may be increased, in other words, the second RSRP threshold is increased. The first terminal device sends the first information on the time-frequency resource other than the time-frequency resource whose RSRP is greater than the second RSRP threshold. In this way, the resources that can be used by the first terminal device can be reduced, and more available resources are remaining. In other words, a large quantity of available resources are reserved for the second terminal device.

Example 3: A channel occupation value obtained by the first terminal device is less than the channel occupation threshold, and the channel occupation value is a ratio of a quantity of subchannels that have been occupied or allocated to and occupied by the first terminal apparatus in a second measurement window and that are in the second resource pool to a quantity of all subchannels that are in the second resource pool and that are included in the second measurement window. It may be understood that the resource usage is inversely proportional to the channel occupation threshold. Larger resource usage indicates that a large quantity of resources need to be occupied when the second terminal device sends the second information in the second resource pool. In this case, the first terminal device may determine that a small channel occupation value is small, to occupy or allocate a small quantity of subchannels, to reserve a large quantity of available resources for the second terminal device.

Example 4: The first terminal device determines, based on the maximum transmit power, transmit power used for sending the first information in the second resource pool. It may be understood that the resource usage is inversely proportional to the maximum transmit power.

Example 5: The first terminal device receives the enabling information. When the enabling information indicates enable (enable), the first information is sent in the second resource pool; otherwise, the first information is not sent in the second resource pool. That the enabling information indicates enable may alternatively be considered that the enabling information indicates the first terminal device to send the first information in the second resource pool. When the resource usage is greater than or equal to a threshold, for example, a third threshold, it may be considered that the second terminal device needs to occupy a large quantity of resources to send the second information in the second resource pool. In this case, to reduce the interference of the first information to receiving the second information by the another terminal apparatus, and ensure the reliability of the second information, the network device may indicate the first terminal device not to send the first information in the second resource pool, or the network device may indicate that the first terminal device is forbidden to send the first information in the second resource pool. On the contrary, when the resource usage is less than the third threshold, it may be considered that the second terminal device needs to occupy a small quantity of resources to send the second information in the second resource pool, and the first terminal device may be allowed to send the first information in the second resource pool. For example, the network device sends the enabling information to the first terminal device, where the enabling information may indicate or allow or activate the first terminal device to send the first information in the second resource pool, to improve resource utilization efficiency of the second resource pool, improve a system throughput, and enhance transmission reliability.

Example 6: The first terminal apparatus determines, based on the subchannel information, a quantity of subchannels used for sending the first information in the second resource pool. The subchannel information may include a quantity of subchannels. It may be understood that the resource usage is inversely proportional to the quantity of subchannels. When the resource usage is large, a large quantity of subchannels need to be occupied when the second terminal device sends the second information in the second resource pool. Correspondingly, to reserve more subchannels for the second terminal device, the first terminal device may use a small quantity of subchannels to send the first information. Further, the subchannel information may further indicate at least one subchannel that is in the second resource pool and that is specifically used for sending the first information or the second information. For example, the subchannel information may include a position of the at least one subchannel in the second resource pool. For example, the subchannel information may include a sequence number of a start subchannel and a quantity of the at least one subchannel. Alternatively, the subchannel information may include a sequence number of an end subchannel and a quantity of the at least one subchannel. Alternatively, the subchannel information may include a sequence number of a start subchannel and a sequence number of an end subchannel.

It may be understood that the first terminal device may send the first information in the second resource pool based on one or more of the foregoing information. It may be considered that the network device may configure, based on the resource usage, appropriate resources for a terminal device that sends the first information and a terminal device that sends the second information, to improve the resource utilization. Further, if resource usage of the second information is low, to further improve the resource utilization, the first terminal device may be allowed to share a resource configured for the second terminal device. In addition, the network device may adjust, based on the resource usage of the second information, some parameters used by the first terminal device to send the first information, to improve the transmission reliability of the first information.

In embodiments provided in this application, the method provided in embodiments of this application is described separately from a perspective of interaction between the first terminal device, the network device, and even the second terminal device. Steps performed by the network device may be implemented by different functional entities included in the network device. In other words, the functional entities that perform the steps of the network device may be located in different physical entities. For example, a first functional entity is configured to receive resource occupation information from a first terminal device. A second functional entity is configured to determine a second resource pool based on the resource occupation information reported by the first terminal device. A third functional entity is configured to send second configuration information. In other words, the first functional entity, the second functional entity, and the third functional entity jointly complete the steps performed by the network device in embodiments of this application. A specific division manner of the functional entities is not limited in this application. For example, the second functional entity and the third functional entity may alternatively be one functional entity. When a network architecture includes one or more DUs, one or more CUs, and one or more radio frequency units (radio units, RUs), the steps performed by the network device may be implemented by one or more of the following: the DUs, the CUs, and the RUs. To implement the functions in the foregoing method provided in embodiments of this application, the first terminal device and the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular application and design constraints of the technical solutions.

An embodiment of this application further provides a communication apparatus. The following describes, with reference to accompanying drawings, the communication apparatus configured to implement the foregoing method in embodiments of this application.

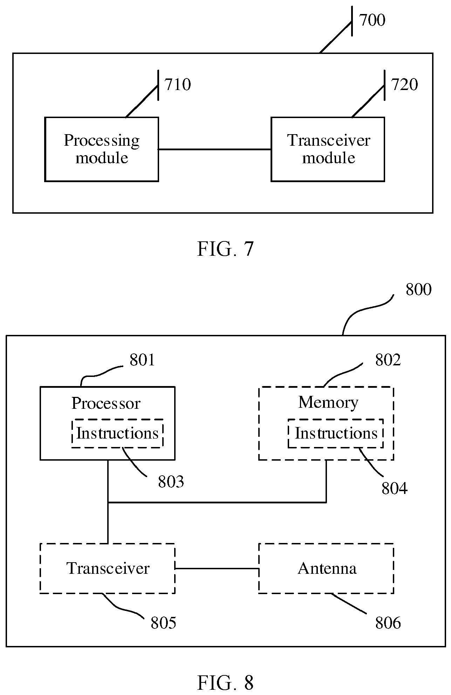

FIG. 7 is a schematic block diagram of a communication apparatus 700 according to an embodiment of this application. The communication apparatus 700 may include a processing module 710 and a transceiver module 720. Optionally, a storage unit may be further included. The storage unit may be configured to store instructions (code or a program) and/or data. The processing module 710 and the transceiver module 720 may be coupled to the storage unit. For example, the processing module 710 may read the instructions (the code or the program) and/or the data in the storage unit, to implement a corresponding method. The foregoing units may be independently disposed, or may be partially or completely integrated.

In some possible implementations, the communication apparatus 700 may correspondingly implement behavior and functions that are of the first terminal device in the foregoing method embodiments, for example, implement the method performed by the first terminal device in the embodiment in FIG. 4. For example, the communication apparatus 700 may be the first terminal device, a component (for example, a chip or a circuit) used in the first terminal device, a chip or a chip set in the first terminal device, or a part that is of a chip and that is configured to perform a related method function.

For example, the processing module 710 may be configured to obtain first configuration information, where the first configuration information indicates a first resource pool. The first resource pool is used by the communication apparatus 700 to send first information, and the first information is information using NR radio access. The transceiver module 720 may be configured to send resource occupation information to a network device. The resource occupation information indicates resource occupation of a second information set in the first resource pool. The second information set includes information that is from at least one second terminal device and that is received by the communication apparatus 700 on a first time-frequency resource included in the first resource pool. Second information is information using E-UTRA radio access.

In an optional implementation, the transceiver module 720 is further configured to receive second configuration information from the network device. The second configuration information is used for configuring a second resource pool. The second configuration information is determined based on the resource occupation information of the second information set in the first resource pool. The second resource pool is used by the communication apparatus 700 to send the first information.

In an optional implementation, the first time-frequency resource belongs to time-frequency resources where the first resource pool and a third resource pool overlap. The third resource pool is used by the at least one second terminal apparatus to send second information.

In an optional implementation, the resource occupation information includes resource usage. The resource usage is a ratio of a quantity of subchannels occupied by the second information set in a first measurement window to a total quantity of subchannels that are in the first resource pool and that are included in the first measurement window. A length of the first measurement window is configured, preconfigured, or predefined by the network device. The subchannels occupied by the second information set include a subchannel whose RSRP value is greater than an RSRP threshold. The first RSRP threshold is configured, preconfigured, or predefined by the network apparatus. Alternatively, the subchannels occupied by the second information set include a subchannel whose received signal strength indicator RSSI value is greater than a first RSSI threshold. The first RSSI threshold is configured, preconfigured, or predefined by the network apparatus.

In an optional implementation, the resource usage is greater than or equal to a first threshold. Time-frequency resources included in the second resource pool are fewer than time-frequency resources included in the first resource pool. Alternatively, the resource usage is greater than or equal to a second threshold. Frequency domain resources included in the second resource pool do not overlap with a first channel. The first channel includes frequency domain resources included in the first resource pool and frequency domain resources included in the third resource pool. The resource usage $COR$ and a first proportion $R_{E-UTRA}^{NR}$ satisfy the following formula:

$$\alpha_1 \times COR \le R_{E-UTRA}^{NR} \le \alpha_2 \times COR$$

, where $0 < \alpha_1 \le \alpha_2 \le 1$. The first proportion is a proportion of frequency domain resources that are occupied on a first channel and that are in frequency domain resources included in the second resource pool. The first channel includes frequency domain resources included in the first resource pool and frequency domain resources included in the third resource pool.

In an optional implementation, the second resource pool is further used by the second terminal device to send the second information. The second configuration information further includes at least one of the following information: a priority value threshold, an RSRP threshold, a channel occupation threshold, maximum transmit power, enabling information, or subchannel information. A priority value of the first information is less than or equal to the priority value threshold, and the communication apparatus 700 sends the first information in the second resource pool. The communication apparatus 700 sends the first information on a time-frequency resource other than a time-frequency resource whose RSRP is greater than the RSRP threshold in the second resource pool. A channel occupation value obtained by the communication apparatus 700 is less than the channel occupation threshold, and the channel occupation value is a ratio of a quantity of subchannels that have been occupied or allocated to and occupied by the communication apparatus 700 in a second measurement window and that are in the second resource pool to a quantity of all subchannels that are in the second resource pool and that are included in the second measurement window. The communication apparatus 700 determines, based on the maximum transmit power, transmit power used for sending the first information in the second resource pool. The communication apparatus 700 receives the enabling information, and sends the first information in the second resource pool. The communication apparatus 700 determines, based on the subchannel information, a quantity of subchannels used for sending the first information in the second resource pool. The transceiver module 720 is further configured to send the first information in the second resource pool based on the at least one of the information.

In some possible implementations, the communication apparatus 700 may correspondingly implement behavior and functions that are of the network device in the foregoing method embodiments, for example, implement the method performed by the network device in the embodiment in FIG. 4. For example, the communication apparatus 700 may be the network device, a component (for example, a chip or a circuit) used in the network device, a chip or a chip set in the network device, or a part that is of a chip and that is configured to perform a related method function.

For example, the transceiver module 720 may be configured to send first configuration information to a first terminal device, where the first configuration information indicates a first resource pool. The first resource pool is used by the first terminal device to send first information, and the first information is information using NR radio access. The transceiver module 720 is further configured to receive resource occupation information from the first terminal device. The resource occupation information indicates resource occupation of a second information set in the first resource pool. The second information set includes information that is from at least one second terminal device and that is received by the communication apparatus 700 on a first time-frequency resource included in the first resource pool. Second information is information using E-UTRA radio access.

In an optional implementation, the transceiver module 720 is further configured to send second configuration information to the first terminal device. The second configuration information is determined based on the resource occupation information of the second information set in the first resource pool. The second resource pool is used by the communication apparatus 700 to send the first information.

In an optional implementation, the first time-frequency resource belongs to time-frequency resources where the first resource pool and a third resource pool overlap. The third resource pool is used by the at least one second terminal apparatus to send second information.

In an optional implementation, the resource occupation information includes resource usage. The resource usage is a ratio of a quantity of subchannels occupied by the second information set in a first measurement window to a total quantity of subchannels that are in the first resource pool and that are included in the first measurement window. A length of the first measurement window is configured, preconfigured, or predefined by the communication apparatus 700. The subchannels occupied by the second information set include a subchannel whose RSRP value is greater than an RSRP threshold. The first RSRP threshold is configured, preconfigured, or predefined by the network apparatus. Alternatively, the subchannels occupied by the second information set include a subchannel whose received signal strength indicator RSSI value is greater than a first RSSI threshold. The first RSSI threshold is configured, preconfigured, or predefined by the network apparatus.

In an optional implementation, the resource usage is greater than or equal to a first threshold. Time-frequency resources included in the second resource pool are fewer than time-frequency resources included in the first resource pool. Alternatively, the resource usage is greater than or equal to a second threshold. Frequency domain resources included in the second resource pool do not overlap with a first channel. The first channel includes frequency domain resources included in the first resource pool and frequency domain resources included in the third resource pool. The resource usage $COR$ and a first proportion $R_{E-UTRA}^{NR}$ satisfy the following formula:

$$\alpha_1 \times COR \leq R_{E-UTRA}^{NR} \leq \alpha_2 \times COR$$

, where $0 < \alpha_1 \leq \alpha_2 \leq 1$. The first proportion is a proportion of frequency domain resources that are occupied on a first channel and that are in frequency domain resources included in the second resource pool. The first channel includes frequency domain resources included in the first resource pool and frequency domain resources included in the third resource pool.

In an optional implementation, the second resource pool is further used by the second terminal device to send the second information. The second configuration information further includes at least one of the following information: a priority value threshold, an RSRP threshold, a channel occupation threshold, maximum transmit power, enabling information, or subchannel information. A priority value of the first information is less than or equal to the priority value threshold, and the first terminal device sends the first information in the second resource pool. The first terminal device sends the first information on a time-frequency resource other than a time-frequency resource whose RSRP is greater than the RSRP threshold in the second resource pool. A channel occupation value obtained by the first terminal device is less than the channel occupation threshold, and the channel occupation value is a ratio of a quantity of subchannels that have been occupied or allocated to and occupied by the first terminal device in a second measurement window and that are in the second resource pool to a quantity of all subchannels that are in the second resource pool and that are included in the second measurement window. The first terminal device determines, based on the maximum transmit power, transmit power used for sending the first information in the second resource pool. The first terminal device receives the enabling information, and sends the first information in the second resource pool. The first terminal device determines, based on the subchannel information, a quantity of subchannels used for sending the first information in the second resource pool. The transceiver module 720 is further configured to send the first information in the second resource pool based on the at least one of the information.

FIG. 8 is a schematic block diagram of a communication apparatus 800 according to an embodiment of this application. The communication apparatus 800 may be a terminal device, and can implement functions of the first terminal device in the method provided in embodiments of this application. Alternatively, the communication apparatus 800 may be a network device, and can implement functions of the network device in the method provided in embodiments of this application. Alternatively, the communication apparatus 800 may be an apparatus that can support the first terminal device in implementing a corresponding function in the method provided in embodiments of this application, or an apparatus that can support the network device in implementing a corresponding function in the method provided in embodiments of this application. The communication apparatus 800 may be a chip system. In embodiments of this application, the chip system may include a chip, or may include a chip and another discrete component. For a specific function, refer to the descriptions in the method embodiments.

The communication apparatus 800 includes one or more processors 801, configured to implement or support the communication apparatus 800 in implementing the functions of the network device (base station) or the first terminal device in the method provided in embodiments of this application. For details, refer to the detailed descriptions in the method example. Details are not described herein again. The processor 801 may also be referred to as a processing unit or a processing module, and may implement a specific control function. The processor 801 may be a general-purpose processor, a dedicated processor, or the like. For example, the processor 801 includes: a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 800, execute a software program, and/or process data. Different processors may be independent components, or may be integrated into one or more processors, for example, integrated into one or more application-specific integrated circuits.

Optionally, the communication apparatus 800 includes one or more memories 802, configured to store instructions 804. The instructions may be run on the processor 801, to enable the communication apparatus 800 to perform the method described in the foregoing method embodiment. The memory 802 is coupled to the processor 801. The coupling in this embodiment of this application may be an indirect coupling or a communication connection between apparatuses, units, or modules in an electrical form, a mechanical form, or another form, and is used for information exchange between the apparatuses, the units, or the modules. The processor 801 may operate in collaboration with the memory 802. At least one of the at least one memory may be included in the processor. It should be noted that, the memory 802 is not mandatory, and therefore is shown by using a dashed line in FIG. 8.

Optionally, the memory 802 may further store data. The processor and the memory may be separately disposed, or may be integrated together. In this embodiment of this application, the memory 802 may be a nonvolatile memory, a hard disk drive (hard disk drive, HDD), a solid-state drive (solid-state drive, SSD), or the like, or may be a volatile memory (volatile memory), for example, a random access memory (random access memory, RAM). The memory is any other medium that can be used for carrying or storing expected program code having instructions or in a data structure form and that can be accessed by a computer, but is not limited thereto. The memory in embodiments of this application may alternatively be a circuit or any other apparatus that can implement a storage function, and is configured to store program instructions and/or data.

Optionally, the communication apparatus 800 may include instructions 803 (which are sometimes referred to as code or programs), and the instructions 803 may be run on the processor, to enable the communication apparatus 800 to perform the method described in the foregoing embodiments. The processor 801 may store data.

Optionally, the communication apparatus 800 may further include a transceiver 805 and an antenna 806. The transceiver 805 may be referred to as a transceiver unit, a transceiver module, a transceiver machine, a transceiver circuit, a transceiver, an input/output interface, or the like, and is configured to implement a transceiver function of the communication apparatus 800 via the antenna 806.

The processor 801 and the transceiver 805 that are described in this application may be implemented on an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 800 may further include one or more of the following components: a wireless communication module, an audio module, an external memory interface, an internal memory, a universal serial bus (universal serial bus, USB) interface, a power management module, an antenna, a loudspeaker, a microphone, an input/output module, a sensor module, a motor, a camera lens, a display screen, or the like. It may be understood that, in some embodiments, the communication apparatus 800 may include more or fewer components, or some components may be integrated, or some components may be split. The components may be hardware, software, or a combination implementation of the software and the hardware.

It should be noted that, the communication apparatus in the foregoing embodiments may be a first terminal device (or a network device), or may be a circuit, or may be a chip used in the first terminal device (or the network device), or may be another combined component or component that has a function of the foregoing first terminal (or the network device), or the like. When the communication apparatus is the first terminal device (or the network device), the transceiver module may be a transceiver, and may include an antenna, a radio frequency circuit, and the like. The processing module may be a processor, for example, a central processing module (central processing unit, CPU). When the communication apparatus is the component having the function of the first terminal device (or the network device), the transceiver module may be a radio frequency unit, and the processing module may be a processor. When the communication apparatus is a chip system, the communication apparatus may be a field programmable gate array (field programmable gate array, FPGA), an application-specific integrated circuit (application-specific integrated circuit, ASIC), a system on chip (system on chip, SoC), a CPU, a network processor (network processor, NP), a digital signal processor (digital signal processor, DSP), a micro controller unit (micro controller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory by using another component) and transmit the code instructions to the processor. The processor may be configured to run the code instructions to perform the method in the foregoing method embodiments. For another example, the interface circuit may alternatively be a signal transmission interface circuit between a communication processor and a transceiver.

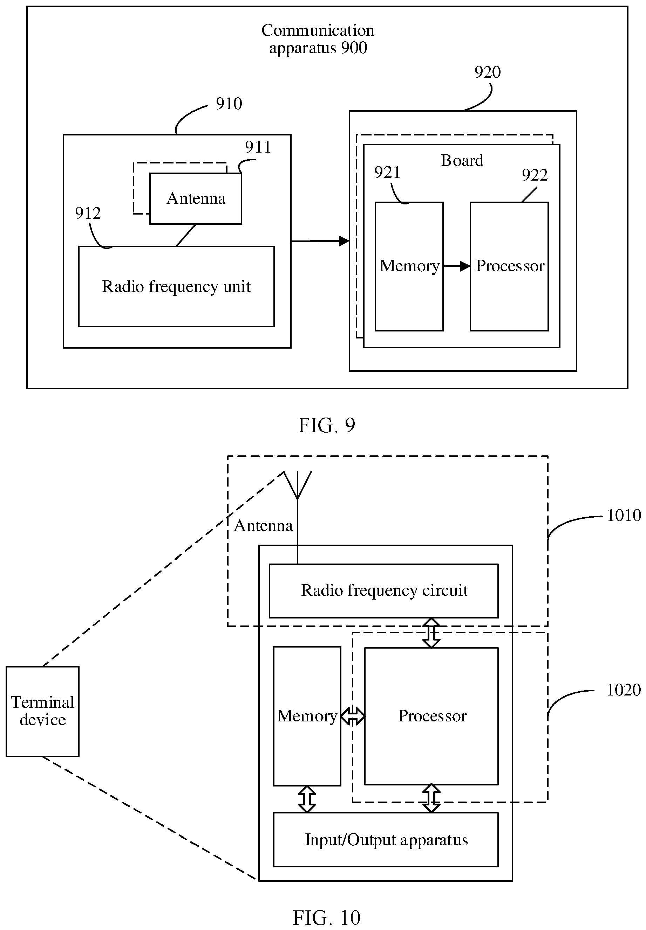

FIG. 9 is a simplified schematic diagram of a structure of a communication apparatus. For ease of understanding and illustration, in FIG. 9, for example, the communication apparatus is a base station. The base station may be used in the system shown in FIG. 3, may be the network device in FIG. 3, and performs functions of the network device in the method embodiments.

The communication apparatus 900 may include a processor 922. The communication apparatus 900 may further include a transceiver 910 and a memory 921. The processor 922 is configured to support the communication apparatus 900 in performing a corresponding function in the foregoing method. The transceiver 910 may be used by the communication apparatus 900 for communication, for example, is configured to send the foregoing first configuration information or receive the foregoing resource occupation information. The memory 921 is coupled to the processor 922, and may be configured to store a program and data that are necessary for the communication apparatus 900 to implement various functions.

Specifically, the transceiver 910 may be a wireless transceiver, and may be configured to support the communication apparatus 900 in receiving and sending signaling and/or data through a radio air interface. The transceiver 910 may also be referred to as a transceiver unit or a communication unit. The transceiver 910 may include one or more radio frequency units 912 and one or more antennas 911. The radio frequency unit, for example, a remote radio unit (remote radio unit, RRU) or an active antenna unit (active antenna unit, AAU), may be specifically configured to: transmit a radio frequency signal, and perform conversion between the radio frequency signal and a baseband signal. The one or more antennas may be specifically configured to radiate and receive the radio frequency signal. Optionally, the transceiver 910 may include only the foregoing radio frequency unit. In this case, the communication apparatus 900 may include the transceiver 910, the memory 921, the processor 922, and the antenna 911.

The memory 921 and the processor 922 may be integrated together or may be independent of each other. As shown in FIG. 9, the memory 921 and the processor 922 may be integrated into a control unit 920 of the communication apparatus 900. For example, the control unit 920 may include a baseband unit (baseband unit, BBU) of an LTE base station, where the baseband unit may also be referred to as a digital unit (digital unit, DU). Alternatively, the control unit 920 may include a DU and/or a CU in a base station in 5G and a future radio access technology. The control unit 920 may include one or more antenna panels. A plurality of antenna panels may jointly support a radio access network (for example, an LTE network) of a single access standard, or the plurality of antenna panels may separately support radio access networks (for example, an LTE network, a 5G network, and another network) of different access standards. The memory 921 and the processor 922 may serve one or more antenna panels. In other words, the memory 921 and the processor 922 may be separately disposed on each antenna panel. Alternatively, the plurality of antenna panels may share a same memory 921 and a same processor 922. In addition, a necessary circuit may be disposed on each antenna panel. For example, the circuit may be configured to implement the coupling between the memory 921 and the processor 922. The transceiver 910, the processor 922, and the memory 921 may be connected to each other by using a bus (bus) structure and/or another connection medium.

Based on the structure shown in FIG. 9, when the communication apparatus 900 needs to send data, the processor 922 may perform baseband processing on the to-be-sent data and output a baseband signal to the radio frequency unit, and the radio frequency unit performs radio frequency processing on the baseband signal and sends a radio frequency signal in an electromagnetic wave form via an antenna. When data is sent to the communication apparatus 900, the radio frequency unit receives a radio frequency signal via the antenna, converts the radio frequency signal into a baseband signal, and outputs the baseband signal to the processor 922. The processor 922 converts the baseband signal into data, and processes the data.

Based on the structure shown in FIG. 9, the transceiver 910 may be configured to perform the steps performed by the transceiver 805, and/or the processor 922 may be configured to invoke instructions in the memory 921, to perform the steps performed by the processor 801.

FIG. 10 is a simplified schematic diagram of a structure of a terminal device. For ease of understanding and illustration, in FIG. 10, for example, the terminal device is a mobile phone. As shown in FIG. 10, the terminal device includes a processor a memory, a radio frequency circuit, an antenna, and an input/output apparatus. The processor is mainly configured to: process a communication protocol and communication data, control an on-board unit, execute a software program, and process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that, some types of devices may not have an input/output apparatus.

When needing to send data, the processor performs baseband processing on the to-be-sent data and outputs a baseband signal to the radio frequency circuit, and the radio frequency circuit performs radio frequency processing on the baseband signal and then sends a radio frequency signal, to the outside, in an electromagnetic wave form via an antenna. When data is sent to the device, the radio frequency circuit receives a radio frequency signal via the antenna, converts the radio frequency signal into a baseband signal, and outputs the baseband signal to the processor. The processor converts the baseband signal into data, and processes the data. For ease of description, FIG. 10 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as transceiver units of the apparatus, and the processor having a processing function may be considered as a processing unit of the apparatus. As shown in FIG. 10, the apparatus includes a transceiver unit 1010 and a processing unit 1020. The transceiver unit 1010 may also be referred to as a transceiver, a transceiver machine, a transceiver apparatus, or the like. The processing unit 1020 may also be referred to as a processor, a processing board, a processing module, a processing apparatus, or the like. Optionally, a component configured to implement a receiving function in the transceiver unit 1010 may be considered as a receiving unit, and a component configured to implement a sending function in the transceiver unit 1010 may be considered as a sending unit. In other words, the transceiver unit 1010 includes the receiving unit and the sending unit. The transceiver unit 1010 sometimes may also be referred to as a transceiver machine, a transceiver, a transceiver circuit, or the like. The receiving unit sometimes may also be referred to as a receiver machine, a receiver, a receiving circuit, or the like. The sending unit sometimes may also be referred to as a transmitter machine, a transmitter, a transmitting circuit, or the like.

It should be understood that the transceiver unit 1010 is configured to perform a sending operation and a receiving operation that are of the first terminal device in the foregoing method embodiments, and the processing unit 1020 is configured to perform an operation other than the sending operation and the receiving operation that are of the first terminal device in the foregoing method embodiments. For example, in an implementation, the transceiver unit 1010 may be configured to perform a sending step and a receiving step that are in the embodiment shown in FIG. 4, and/or configured to support another process of the technology described in this specification. The processing unit 1020 may be configured to perform steps other than the receiving step or the sending step that are in the embodiment shown in FIG. 4, and/or configured to support another process of the technology described in this specification.

When the communication apparatus is a chip-like apparatus or a circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a plurality of terminal devices, or may further include more network devices and a plurality of terminal devices. For example, the communication system includes a network device and a terminal device, for example, the first terminal device that is configured to implement a related function in FIG. 4. The network device is separately configured to implement a part of functions of a related network in FIG. 4. The terminal device is configured to implement a function of a related terminal device, for example, the first terminal device in FIG. 4. For details, refer to the related descriptions in the method embodiment. Details are not described herein again.

An embodiment of this application further provides a computer-readable storage medium, including instructions; and when the instructions are run on a computer, the computer is enabled to perform the method performed by the network device in FIG. 4. Alternatively, when the instructions are run on a computer, the computer is enabled to perform the method performed by the first terminal device in FIG. 4.

An embodiment of this application further provides a computer program product, including instructions; and when the instructions are run on a computer, the computer is enabled to perform the method performed by the network device in FIG. 4. Alternatively, when the instructions are run on a computer, the computer is enabled to perform the method performed by the first terminal device in FIG. 4.

An embodiment of this application provides a chip system. The chip system includes a processor, may further include a memory, and is configured to implement the function of the network device or the first terminal device in the foregoing method; or configured to implement functions of the network device and the terminal in the foregoing method. The chip system may include a chip, or may include a chip and another discrete component.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and the electronic hardware. Whether the functions are performed by hardware or software depends on particular application and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, in the technical solutions of this application, the part essentially making contributions, or the part of the technical solutions may be implemented in a form of a software product. The computer software product is stored in a storage medium, and includes several instructions, to enable a computer device (which may be a personal computer, a server, or a network device) to perform all or some of the steps of the methods described in embodiments of this application. The foregoing storage medium includes: any medium, for example, a USB flash drive, a removable hard disk drive, a read-only memory (read-only memory, ROM), a RAM, a magnetic disk, or an optical disc that can store program code.

Obviously, a person skilled in the art may make various modifications and variations to this application. This application is intended to cover these modifications and variations of this application provided that they fall within the scope of the following claims of this application and their equivalent technologies.

## Claims

1. A resource configuration method, comprising:

    obtaining first configuration information, wherein the first configuration information indicates a first resource pool, the first resource pool is used by a first terminal apparatus to send first information, and the first information is information using new radio NR radio access; and
    sending resource occupation information to a network apparatus, wherein the resource occupation information indicates resource occupation of a second information set in the first resource pool, the second information set comprises information that is from at least one second terminal apparatus and that is received by the first terminal apparatus on a first time-frequency resource comprised in the first resource pool, and second information is information using evolved universal terrestrial radio access E-UTRA radio access.

2. The method according to claim 1, wherein the method further comprises:
    receiving second configuration information from the network apparatus, wherein the second configuration information is used for configuring a second resource pool, the second configuration information is determined based on the resource occupation information of the second information set in the first resource pool, and the second resource pool is used by the first terminal apparatus to send the first information.

3. The method according to claim 1 or 2, wherein the first time-frequency resource belongs to time-frequency resources where the first resource pool and a third resource pool overlap, and the third resource pool is used by the at least one second terminal apparatus to send the second information.

4. The method according to claim 1 or 3, wherein the resource occupation information comprises resource usage, the resource usage is a ratio of a quantity of subchannels occupied by the second information set in a first measurement window to a total quantity of subchannels that are in the first resource pool and that are comprised in the first measurement window, and a length of the first measurement window is configured, preconfigured, or predefined by the network apparatus, wherein the subchannels occupied by the second information set comprise a subchannel whose reference signal received power RSRP value is greater than a first RSRP threshold, or the subchannels occupied by the second information set comprise a subchannel whose received signal strength indicator RSSI value is greater than a first RSSI threshold, and the first RSRP threshold or the first RSSI threshold is configured, preconfigured, or predefined by the network apparatus.

5. The method according to claim 4, wherein the resource usage is greater than or equal to a first threshold, and time-frequency resources comprised in the second resource pool are fewer than time-frequency resources comprised in the first resource pool; or

    the resource usage is greater than or equal to a second threshold, frequency domain resources comprised in the second resource pool do not overlap with a first channel, and the first channel comprises frequency domain resources comprised in the first resource pool and frequency domain resources comprised in the third resource pool; or
    the resource usage $COR$ and a first proportion $R\,^{NR}_{E-UTRA}$ satisfy the following formula:

    $$\alpha_1 \times COR \le R\,^{NR}_{E-UTRA} \le \alpha_2 \times COR \ ,$$

    wherein $0 < \alpha_1 \le \alpha_2 \le 1$, the first proportion is a proportion of frequency domain resources that are occupied on a first channel and that are in frequency domain resources of the second resource pool, and the first channel comprises frequency domain resources comprised in the first resource pool and frequency domain resources comprised in the third resource pool.

6. The method according to any one of claims 1 to 5, wherein the second resource pool is further used by the second terminal apparatus to send the second information, and the second configuration information further comprises at least one of the following information:

    a priority value threshold, wherein a priority value of the first information is less than or equal to the priority value threshold, and the first terminal apparatus sends the first information in the second resource pool;
    a second RSRP threshold, wherein the first terminal apparatus sends the first information on a time-frequency resource, other than a time-frequency resource whose RSRP is greater than the second RSRP threshold, in the second resource pool;
    a channel occupation threshold, wherein a channel occupation value obtained by the first terminal apparatus is less than the channel occupation threshold, and the channel occupation value is a ratio of a quantity of subchannels that have been occupied or allocated to and occupied by the first terminal apparatus in a second measurement window and that are in the second resource pool to a quantity of all subchannels that are in the second resource pool and that are comprised in the second measurement window;

maximum transmit power, wherein the first terminal apparatus determines, based on the maximum transmit power, transmit power used for sending the first information in the second resource pool;

enabling information, wherein the first terminal apparatus receives the enabling information, and sends the first information in the second resource pool; or

subchannel information, wherein the first terminal apparatus determines, based on the subchannel information, a quantity of subchannels used for sending the first information in the second resource pool; and

the method further comprises: sending the first information in the second resource pool based on the at least one of the information.

7. A resource configuration method, comprising:

sending first configuration information to a first terminal apparatus, wherein the first configuration information indicates a first resource pool, the first resource pool is used by the first terminal apparatus to send first information, and the first information is information using new radio NR radio access; and

receiving resource occupation information from the first terminal apparatus, wherein the resource occupation information indicates resource occupation of a second information set in the first resource pool, the second information set comprises information that is from at least one second terminal apparatus and that is received by the first terminal apparatus on a first time-frequency resource comprised in the first resource pool, and second information is information using evolved universal terrestrial radio access E-UTRA radio access.

8. The method according to claim 7, wherein the method further comprises:
sending second configuration information to the first terminal apparatus, wherein the second configuration information is used for configuring a second resource pool, the second configuration information is determined based on the resource occupation information of the second information set in the first resource pool, and the second resource pool is used by the first terminal apparatus to send the first information.

9. The method according to claim 8, wherein the first time-frequency resource belongs to time-frequency resources where the first resource pool and a third resource pool overlap, and the third resource pool is used by the second terminal apparatus to send the second information.

10. The method according to claim 8 or 9, wherein the resource occupation information comprises resource usage, the resource usage is a ratio of a quantity of subchannels occupied by the second information set in a first measurement window to a total quantity of subchannels that are in the first resource pool and that are comprised in the first measurement window, and a length of the first measurement window is configured, preconfigured, or predefined by the network apparatus, wherein
the subchannels occupied by the second information set comprise a subchannel whose reference signal received power RSRP value is greater than a first RSRP threshold, or the subchannels occupied by the second information set comprise a subchannel whose received signal strength indicator RSSI value is greater than a first RSSI threshold, and the first RSRP threshold or the first RSSI threshold is configured, preconfigured, or predefined by the network apparatus.

11. The method according to claim 10, wherein the resource usage is greater than or equal to a first threshold, and time-frequency resources comprised in the second resource pool are fewer than time-frequency resources comprised in the first resource pool; or

the resource usage is greater than or equal to a second threshold, frequency domain resources comprised in the second resource pool do not overlap with a first channel, and the first channel comprises frequency domain resources comprised in the first resource pool and frequency domain resources comprised in the third resource pool; or
the resource usage $COR$ and a first proportion $R_{E-UTRA}^{NR}$ satisfy the following formula:

$$\alpha_1 \times COR \le R_{E-UTRA}^{NR} \le \alpha_2 \times COR,$$

wherein $0 < \alpha_1 \le \alpha_2 \le 1$, the first proportion is a proportion of frequency domain resources that are occupied on a first channel and that are in frequency domain resources of the second resource pool, and the first channel comprises frequency domain resources comprised in the first resource pool and frequency domain resources comprised in the third resource pool.

12. The method according to any one of claims 8 to 11, wherein the second configuration information is further used for configuring a fourth resource pool, and the fourth resource pool is used by the at least one second terminal apparatus to send the second information.

13. The method according to any one of claims 7 to 12, wherein the second resource pool is further used by the at least one second terminal apparatus to send the second information, the second configuration information further comprises at least one of the following information, and the at least one of the information is used by the first terminal apparatus to send the first information in the second resource pool:

a priority value threshold, wherein a priority value of the first information is less than or equal to the priority value threshold, and the first terminal apparatus sends the first information in the second resource pool;
a second RSRP threshold, wherein the first terminal apparatus sends the first information on a time-frequency resource, other than a time-frequency resource whose RSRP is greater than the second RSRP threshold, in the second resource pool;
a channel occupation threshold, wherein a channel occupation value obtained by the first terminal apparatus is less than the channel occupation threshold, and the channel occupation value is a ratio of a quantity of subchannels that have been occupied or allocated to and occupied by the first terminal apparatus in a second measurement window and that are in the second resource pool to a quantity of all subchannels that are in the second resource pool and that are comprised in the second measurement window;
maximum transmit power, wherein the first terminal apparatus determines, based on the maximum transmit power, transmit power used for sending the first information in the second resource pool;
enabling information, wherein the first terminal apparatus receives the enabling information, and sends the first information in the second resource pool; or
subchannel information, wherein the first terminal apparatus determines, based on the subchannel information, a quantity of subchannels used for sending the first information in the second resource pool.

14. A communication apparatus, wherein the communication apparatus comprises a processing module and a transceiver module, wherein

the processing module is configured to obtain first configuration information, wherein the first configuration information indicates a first resource pool, the first resource pool is used by a communication apparatus to send first information, and the first information is information using new radio NR radio access; and
the transceiver module is configured to send resource occupation information to a network apparatus, wherein the resource occupation information indicates resource occupation of a second information set in the first resource pool, the second information set comprises information that is from at least one second terminal apparatus and that is received by the communication apparatus on a first time-frequency resource comprised in the first resource pool, and second information is information using evolved universal terrestrial radio access E-UTRA radio access.

15. The communication apparatus according to claim 14, wherein the transceiver module is further configured to:
receive second configuration information from the network apparatus, wherein the second configuration information is used for configuring a second resource pool, the second configuration information is determined based on the resource occupation information of the second information set in the first resource pool, and the second resource pool is used by the communication apparatus to send the first information.

16. The communication apparatus according to claim 14 or 15, wherein the first time-frequency resource belongs to time-frequency resources where the first resource pool and a third resource pool overlap, and the third resource pool is used by the at least one second terminal apparatus to send the second information.

17. The communication apparatus according to claim 16, wherein the resource occupation information comprises resource usage, the resource usage is a ratio of a quantity of subchannels occupied by the second information set in a first measurement window to a total quantity of subchannels that are in the first resource pool and that are comprised in the first measurement window, and a length of the first measurement window is configured, preconfigured, or predefined by the network apparatus, wherein
the subchannels occupied by the second information set comprise a subchannel whose reference signal received power RSRP value is greater than a first RSRP threshold, or the subchannels occupied by the second information set comprise a subchannel whose received signal strength indicator RSSI value is greater than a first RSSI threshold, and the first RSRP threshold or the first RSSI threshold is configured, preconfigured, or predefined by the network apparatus.

18. The communication apparatus according to claim 17, wherein the resource usage is greater than or equal to a first threshold, and time-frequency resources comprised in the second resource pool are fewer than time-frequency resources comprised in the first resource pool; or

the resource usage is greater than or equal to a second threshold, frequency domain resources comprised in the second resource pool do not overlap with a first channel, and the first channel comprises frequency domain resources comprised in the first resource pool and frequency domain resources comprised in the third resource pool; or
the resource usage $COR$ and a first proportion $R_{E-UTRA}^{NR}$ satisfy the following formula:

$$\alpha_1 \times COR \le R_{E-UTRA}^{NR} \le \alpha_2 \times COR$$

, wherein $0 < \alpha_1 \le \alpha_2 \le 1$, the first proportion is a proportion of frequency domain resources that are occupied on a first channel and that are in frequency domain resources of the second resource pool, and the first channel comprises frequency domain resources comprised in the first resource pool and frequency domain resources comprised in the third resource pool.

19. The communication apparatus according to any one of claims 14 to 18, wherein the second resource pool is further used by the second terminal apparatus to send the second information, and the second configuration information further comprises at least one of the following information:

a priority value threshold, wherein a priority value of the first information is less than or equal to the priority value threshold, and the communication apparatus sends the first information in the second resource pool;
a second RSRP threshold, wherein the communication apparatus sends the first information on a time-frequency resource, other than a time-frequency resource whose RSRP is greater than the second RSRP threshold, in the second resource pool;
a channel occupation threshold, wherein a channel occupation value obtained by the communication apparatus is less than the channel occupation threshold, and the channel occupation value is a ratio of a quantity of subchannels that have been occupied or allocated to and occupied by the communication apparatus in a second measurement window and that are in the second resource pool to a quantity of all subchannels that are in the second resource pool and that are comprised in the second measurement window;
maximum transmit power, wherein the communication apparatus determines, based on the maximum transmit power, transmit power used for sending the first information in the second resource pool;
enabling information, wherein the communication apparatus receives the enabling information, and sends the first information in the second resource pool; or
subchannel information, wherein the communication apparatus determines, based on the subchannel information, a quantity of subchannels used for sending the first information in the second resource pool; and
the transceiver module is further configured to send the first information in the second resource pool based on the at least one of the information.

20. A communication apparatus, wherein the communication apparatus comprises a processing module and a transceiver module, wherein

the processing module is configured to generate first configuration information, wherein the first configuration information indicates a first resource pool, the first resource pool is used by a first terminal apparatus to send first information, and the first information is information using new radio NR radio access; and
the transceiver module is configured to: send the first configuration information to the first terminal apparatus, and receive resource occupation information from the first terminal apparatus, wherein the resource occupation information indicates resource occupation of a second information set in the first resource pool, the second information set comprises information that is from at least one second terminal apparatus and that is received by the first terminal apparatus on a first time-frequency resource comprised in the first resource pool, and second information is information using evolved universal terrestrial radio access E-UTRA radio access.

21. The communication apparatus according to claim 20, wherein the method further comprises:
sending second configuration information to the first terminal apparatus, wherein the second configuration information is used for configuring a second resource pool, the second configuration information is determined based on the resource occupation information of the second information set in the first resource pool, and the second resource pool is used by the first terminal apparatus to send the first information.

**22.** The communication apparatus according to claim 21, wherein the first time-frequency resource belongs to time-frequency resources where the first resource pool and a third resource pool overlap, and the third resource pool is used by the second terminal apparatus to send the second information.

**23.** The communication apparatus according to claim 21 or 22, wherein the resource occupation information comprises resource usage, the resource usage is a ratio of a quantity of subchannels occupied by the second information set in a first measurement window to a total quantity of subchannels that are in the first resource pool and that are comprised in the first measurement window, and a length of the first measurement window is configured, preconfigured, or predefined by the communication apparatus, wherein

the subchannels occupied by the second information set comprise a subchannel whose reference signal received power RSRP value is greater than a first RSRP threshold, or the subchannels occupied by the second information set comprise a subchannel whose received signal strength indicator RSSI value is greater than a first RSSI threshold, and the first RSRP threshold or the first RSSI threshold is configured, preconfigured, or predefined by a network apparatus.

**24.** The communication apparatus according to claim 23, wherein the resource usage is greater than or equal to a first threshold, and time-frequency resources comprised in the second resource pool are fewer than time-frequency resources comprised in the first resource pool; or

the resource usage is greater than or equal to a second threshold, frequency domain resources comprised in the second resource pool do not overlap with a first channel, and the first channel comprises frequency domain resources comprised in the first resource pool and frequency domain resources comprised in the third resource pool; or
the resource usage $COR$ and a first proportion

$R_{E-UTRA}^{NR}$ satisfy the following formula:

$$\alpha_1 \times COR \leq R_{E-UTRA}^{NR} \leq \alpha_2 \times COR ,$$

wherein $0 < \alpha_1 \leq \alpha_2 \leq 1$, the first proportion is a proportion of frequency domain resources that are occupied on a first channel and that are in frequency domain resources of the second resource pool, and the first channel comprises frequency domain resources comprised in the first resource pool and frequency domain resources comprised in the third resource pool.

**25.** The communication apparatus according to any one of claims 21 to 24, wherein the second configuration information is further used for configuring a fourth resource pool, and the fourth resource pool is used by the at least one second terminal apparatus to send the second information.

**26.** The communication apparatus according to any one of claims 20 to 25, wherein the second resource pool is further used by the at least one second terminal apparatus to send the second information, the second configuration information further comprises at least one of the following information, and the at least one of the information is used by the first terminal apparatus to send the first information in the second resource pool:

a priority value threshold, wherein a priority value of the first information is less than or equal to the priority value threshold, and the first terminal apparatus sends the first information in the second resource pool;
a second reference signal received power RSRP threshold, wherein the first terminal apparatus sends the first information on a time-frequency resource, other than a time-frequency resource whose RSRP is greater than the second RSRP threshold, in the second resource pool;
a channel occupation threshold, wherein a channel occupation value obtained by the first terminal apparatus is less than the channel occupation threshold, and the channel occupation value is a ratio of a quantity of subchannels that have been occupied or allocated to and occupied by the first terminal apparatus in a second measurement window and that are in the second resource pool to a quantity of all subchannels that are in the second resource pool and that are comprised in the second measurement window;
maximum transmit power, wherein the first terminal apparatus determines, based on the maximum transmit power, transmit power used for sending the first information in the second resource pool;
enabling information, wherein the first terminal apparatus receives the enabling information, and sends the first information in the second resource pool; or

subchannel information, wherein the first terminal apparatus determines, based on the subchannel information, a quantity of subchannels used for sending the first information in the second resource pool.

27. A communication apparatus, wherein the communication apparatus comprises a processor, a communication interface, and a memory, and the processor is coupled to the communication interface, and is configured to invoke computer instructions that are in the memory, to enable the communication apparatus to perform the method according to any one of claims 1 to 6.

28. A communication apparatus, wherein the communication apparatus comprises a processor, a communication interface, and a memory, and the processor is coupled to the communication interface, and is configured to invoke computer instructions that are in the memory, to enable the communication apparatus to perform the method according to any one of claims 7 to 13.

29. A computer-readable storage medium, wherein the computer-readable storage medium stores computer instructions; and when the computer instructions are executed, a computer is enabled to perform the method according to any one of claims 1 to 6.

30. A computer-readable storage medium, wherein the computer-readable storage medium stores computer instructions; and when the computer instructions are executed, a computer is enabled to perform the method according to any one of claims 7 to 13.

FIG. 1

FIG. 2

**EP 4 383 763 A1**

FIG. 3

FIG. 4

34

FIG. 5

(a)          (b)          (c)

FIG. 6

700

710                          720

Processing          Transceiver
module              module

FIG. 7

800

801                          802

Processor           Memory
Instructions        Instructions

803                          804

Transceiver         Antenna

805                          806

FIG. 8

Communication
apparatus 900

920

910

911

Antenna

912

Radio frequency unit

Board

921

Memory

922

Processor

FIG. 9

Antenna

1010

Radio frequency circuit

1020

Terminal
device

Memory

Processor

Input/Output apparatus

FIG. 10

## INTERNATIONAL SEARCH REPORT

| International application No. |
|---|
| **PCT/CN2022/114679** |

### A. CLASSIFICATION OF SUBJECT MATTER

H04W 4/40(2018.01)i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT, CNKI, VEN, USTXT, WOTXT, EPTXT, 3GPP: 配置信息, 资源池, 新无线, 时频资源, 重叠, 资源, 重合, 占用, 占比, 信道, 个数, 窗, 参考信号接收功率, 接收信号强度指示, 优先级, 功率, 使能, NR, LTE, E-UTRA, resource pool, configuration, time frequency, overlap, collision, occupation, ratio, channel, number, window, RSRP, RSSI, priority, power, enable

### C. DOCUMENTS CONSIDERED TO BE RELEVANT

| Category* | Citation of document, with indication, where appropriate, of the relevant passages | Relevant to claim No. |
|---|---|---|
| Y | US 2019150135 A1 (LG ELECTRONICS INC.) 16 May 2019 (2019-05-16) description, paragraphs [0126]-[0150], and figure 10 | 1-4, 6-10, 12-17, 19-23, 25-30 |
| Y | US 2020195414 A1 (QUALCOMM INC.) 18 June 2020 (2020-06-18) description, paragraphs [0055]-[0060] | 1-4, 6-10, 12-17, 19-23, 25-30 |
| A | CN 112970275 A (FG INNOVATION COMPANY LIMITED) 15 June 2021 (2021-06-15) entire document | 1-30 |
| A | WO 2021098483 A1 (OPPO GUANGDONG MOBILE TELECOMMUNICATIONS CO., LTD.) 27 May 2021 (2021-05-27) entire document | 1-30 |
| A | CN 111867106 A (HUAWEI TECHNOLOGIES CO., LTD.) 30 October 2020 (2020-10-30) entire document | 1-30 |
| A | CN 112470511 A (SONY CORPORATION) 09 March 2021 (2021-03-09) entire document | 1-30 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 October 2022** | **08 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/114679**

| Patent document cited in search report | | | Publication date (day/month/year) | Patent family member(s) | | | Publication date (day/month/year) |
|---|---|---|---|---|---|---|---|
| US | 2019150135 | A1 | 16 May 2019 | WO | 2017192006 | A2 | 09 November 2017 |
| US | 2020195414 | A1 | 18 June 2020 | US | 2022255714 | A1 | 11 August 2022 |
| | | | | BR | 112021010979 | A2 | 08 September 2021 |
| | | | | CN | 113170496 | A | 23 July 2021 |
| | | | | WO | 2020131256 | A1 | 25 June 2020 |
| | | | | KR | 20210100633 | A | 17 August 2021 |
| | | | | EP | 3900463 | A1 | 27 October 2021 |
| CN | 112970275 | A | 15 June 2021 | US | 2022022082 | A1 | 20 January 2022 |
| | | | | WO | 2020088655 | A1 | 07 May 2020 |
| | | | | US | 2020145867 | A1 | 07 May 2020 |
| | | | | EP | 3874779 | A1 | 08 September 2021 |
| WO | 2021098483 | A1 | 27 May 2021 | CN | 114788369 | A | 22 July 2022 |
| | | | | KR | 20220100895 | A | 18 July 2022 |
| | | | | EP | 4042772 | A1 | 17 August 2022 |
| | | | | US | 2022256525 | A1 | 11 August 2022 |
| CN | 111867106 | A | 30 October 2020 | | None | | |
| CN | 112470511 | A | 09 March 2021 | WO | 2020063525 | A1 | 02 April 2020 |
| | | | | CN | 110972315 | A | 07 April 2020 |
| | | | | US | 2021306885 | A1 | 30 September 2021 |
| | | | | EP | 3840461 | A1 | 23 June 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111013768